# EUROPEAN PATENT SPECIFICATION

(11) **EP 2 536 299 B1**
(45) Date of publication and mention of the grant of the patent: **19.10.2016**
(21) Application number: 11704844.7
(22) Date of filing: 15.02.2011
(51) Int. Cl.: A23L 13/50, A23L 17/00, A23L 29/10

(54) **EDIBLE BATTER COMPOSITIONS AND METHODS OF PREPARING BATTER-COATED FOODS USING THE SAME**
ESSBARE BACKTEIGZUSAMMENSETZUNGEN UND VERFAHREN ZUR HERSTELLUNG VON MIT BACKTEIG UMHÜLLTEN LEBENSMITTELN DAMIT
COMPOSITIONS DE PÂTE À FRIRE COMESTIBLE ET PROCÉDÉS DE PRÉPARATION D'ALIMENTS ENROBÉS DE PÂTE À FRIRE UTILISANT LESDITES COMPOSITIONS

(30) Priority: 16.02.2010 GB 201002610
(43) Date of publication of application: 26.12.2012
(73) Proprietor: Newly Weds Foods (Banbury) Limited, Banbury Oxfordshire OX16 4TJ (GB)
(72) Inventor: WHITE, David, Oxfordshire OX16 4TJ (GB); LUKER, Peter, Oxfordshire OC16 4TJ (GB)
(74) Representative: Hamer, Christopher K.
(86) International application number: PCT/GB2011/050286
(87) International publication number: WO 2011/101664

(56) References cited:
- EP-A2- 0 445 369
- WO-A1-2010/135272
- US-A- 4 900 573
- US-B2- 7 163 707
- DATABASE GNPD [Online] Mintel; 1 September 2008 (2008-09-01), Anonymous: "Chicken Nuggets", XP002634567, retrieved from www.gnpd.com Database accession no. 966941
- DATABASE GNPD [Online] Mintel; 1 May 2005 (2005-05-01), Anonymous: "30% Fat Reduced Fried Prawns", XP002634568, retrieved from www.gnpd.com Database accession no. 356829
- DATABASE GNPD [Online] Mintel; 1 September 2005 (2005-09-01), Anonymous: "Crispy Potato Wedges in Batter", XP002634569, retrieved from www.gnpd.de Database accession no. 395997
- SEYHAN FIRDEVS DOGAN ET AL: "Effects of batters containing different protein types on the quality of deep-fat-fried chicken nuggets", EUROPEAN FOOD RESEARCH AND TECHNOLOGY ; ZEITSCHRIFT FÜR LEBENSMITTELUNTERSUCHUNG UND -FORSCHUNG A, SPRINGER, BERLIN, DE, vol. 220, no. 5-6, 1 May 2005 (2005-05-01) , pages 502-508, XP019328088, ISSN: 1438-2385, DOI: DOI:10.1007/S00217-004-1099-7
- DONALD E. PSZCZOLA: "New Batters and Breadings", FOOD TECHNOLOGY, [Online] 1 October 2005 (2005-10-01), pages 49-60, XP002634570, Retrieved from the Internet: URL:http://www.proteusindustries.com/news- press/pdfs/IFT_Article.pdf> [retrieved on 2011-04-26]
- Anonymous: "New coating technology opens door to low fat deep fried food", , 20 July 2005 (2005-07-20), pages 1-1, XP002634571, Retrieved from the Internet: URL:http://www.foodnavigator.com/content/v iew/print/52076 [retrieved on 2011-04-26]
- FISZMAN S M ET AL: "Recent developments in coating batters", TRENDS IN FOOD SCIENCE AND TECHNOLOGY, ELSEVIER SCIENCE PUBLISHERS, GB, vol. 14, no. 10, 1 October 2003 (2003-10-01), pages 399-407, XP004458095, ISSN: 0924-2244, DOI: DOI:10.1016/S0924-2244(03)00153-5
- USDA: 'Leavening agent', [Online] pages 1 - 2 Retrieved from the Internet: <URL:http://ndb.nal.usda.gov/ndb/foods/show /5745?fg=&man=&lfacet=&format=&count=&max=2 5&offset=&sort=&qlookup=leavening+agent>
- USDA: 'Leavening agent, cream of tartar', [Online] pages 1 - 2 Retrieved from the Internet: <URL:http://ndb.nal.usda.gov/ndb/foods/show /5746?fg=&man=&lfacet=&format=&count=&max=2 5&offset=&sort=&qlookup=leavening+agent>
- USDA: 'Salt, table', [Online] pages 1 - 2 Retrieved from the Internet: <URL:http://ndb.nal.usda.gov/ndb/foods/show /271?fg=&man=&lfacet=&format=&count=&max=25 &offset=&sort=&qlookup=salt>
- ERNST BOSSE ET AL.: 'Chemical Leavenig Agents', CFB BUDENHEIM pages 30 - 31 * table 8 *

## Description

This invention relates to edible batter compositions for coating food substrates which are subsequently cooked, for example, by frying in fat and/or oil. More specifically, the invention relates to edible batter compositions which reduce the amount of fat that is absorbed when a batter-coated food product is cooked, for example, by frying in fat and/or oil, whilst maintaining desirable characteristics of taste and texture in the cooked food product. The invention also provides precursor compositions that can be used to prepare the edible batter compositions of the invention when combined with water. In further embodiments, the invention provides methods of preparing the inventive edible batter compositions and methods of preparing food products using the inventive edible batter compositions. Still further, the invention provides food products having a coating layer of the edible batter compositions of the invention. Still further, the invention provides use of the edible batter compositions and precursor compositions of the invention in the preparation of food products.

Many food products are prepared by methods which comprise coating a food substrate with a coating of an edible batter composition in the form of a slurry and cooking the coated food substrate by frying in hot oil and/or fat. An example of this is battered fish found in traditional British fish and chip shops, where raw cod or other fish substrate is coated in a layer of wheat flour before being dipped in a tempura type batter. In another known cooking process, whole or formed pieces of chicken are coated with a layer of flour before being coated with an intermediate layer of a breading substance (e.g. breadcrumbs) and dipped in a tempura type batter. Food products prepared in these ways have a cooked batter coating having desirable characteristics of crispness and flavour that are attractive and appetising to consumers, and which also increase the weight and volume of the food product.

Battered products are made in a variety of ways on a variety of substrates in addition to those described above. Substrates may, for example, be selected from fish, poultry, meat, vegetable, mushroom or fruit. The substrate can be pre-cooked or part-cooked before coating in batter, or it may be raw. The substrate may also be hot, ambient, chilled or frozen when coated.

In commercial settings batter-coated food products are often pre-prepared in a food factory in a form which may be reheated or fully cooked in a commercial or domestic kitchen. In some cases, a food substrate having an uncooked coating of batter is simply chilled or frozen and packaged for delivery to consumers. More commonly, however, a food product is provided with a batter coating and cooked or part-cooked by frying in a food factory to set the batter. Part-cooking by frying is known in the industry by the term "par-frying", and the products of such processes are referred to as "par-fried". The term "full-frying" is used to refer to fully cooking food products by frying. The cooked or, more usually, part-cooked food product is subsequently chilled or frozen and packaged for delivery to consumers. The cooked or part-cooked products are then prepared for consumption by frying in fat and/or oil, or by oven baking. In many cases, the commercially prepared products are more complex than the traditional products described above, and comprise a plurality of coating layers to obtain a final product having characteristics of taste and texture, for example, that consumers find appealing.

As used herein, the term "tempura batter" refers to edible batter compositions that may be used as an outer coating for food substrates. Tempura batters are responsible for the initial crispness of a cooked batter coating when eaten, the visual appeal, and much of the flavour of the cooked batter-coated food product. Accordingly, cooked tempura batters require visual and structural qualities that are not required of adhesion batters. In the context of the present invention, the term "tempura batter" should not be interpreted as being limited solely to traditional Japanese tempura batter compositions, which require a specific recipe and preparation of the batter compositions to obtain the characteristic structure of Japanese tempura coatings.

As used herein, the term "adhesion batter" refers to edible batter compositions that are used to adhere an additional coating layer to a food substrate. The adhesion batter coating serves as an adhesive layer between the food substrate and the additional coating layer. The additional coating layer is formed from dry, granular substances known as "intermediates" and is selected based on the granulation, colour, flavour and crispness desired in the cooked coated food product. Examples of intermediates include breadcrumbs and cracker meal. The degree of adhesion of the intermediates may be controlled by altering the viscosity of the adhesion batter composition. Generally, more viscous adhesion batter compositions yield a higher pick-up of intermediates than less viscous compositions. An outer coating of a tempura batter composition is often applied over the intermediate layer.

A particular disadvantage of fried batter-coated food products is that a significant amount of fat and/or oil can be absorbed during frying, increasing the calorific value of the food products and reducing their nutritional value. In view of increasing consumer awareness about healthy eating, methods of reducing the fat and/or oil content of such food products are needed, preferably without reducing the flavour and visual appeal of the food products. Due to this, research and development into reduced fat products is continuously increasing.

Many fat blocking technologies have been developed and tested, including the addition of gums and gelling agents (such as pectin gum, methylcellulose gum, hydroxypropyl methylcellulose gum, xanthan gum, alginates and starches), or protein isolates (such as whey protein isolate, wheat protein isolate, or soy protein isolate) to batter compositions.

WO 96/38054 discloses the use of calcium pectins to resist absorption of oil during cooking of batter-coated and breaded food compositions.

Balasubramaniam et al. (Journal of Food Process Engineering, Volume 20, pages 17 to 29) disclose the use of a hydroxypropyl methylcellulose (HPMC) film coating for moisture retention and fat reduction during deep fat frying.

The use of HPMC or methylcellulose (MC) film-forming solutions is also disclosed by Mallikarjunan et al. (Lebensmittel-Wissenschaft und Technologie, Volume 30, 1997, pages 709 to 714).

US 5,019,406 discloses the use of dietary fibre, such as powdered cellulose, as an additive in batter compositions to reduce the lipid retention in fried batter-coated foods.

US 6,224,921 discloses the use of cold water-swelling rice-based starch products, such as pregelatinised rice flour, phosphorylated rice starch and pregelatinised acetylated rice starch, in fried batter compositions.

US 2002/0001659 discloses the use of alginic esters to retard oil absorption by fried foods, such as noodles, doughnuts and batter coatings.

Williams et al. (Journal of Food Science, Volume 64, 1999, pages 317 to 322) discloses the use of films formed by gellan, MC, and hydroxypropyl cellulose (HPC) gums to reduce fat absorption by fried foods.

The use of protein isolates to reduced fat uptake in fried foods has been described in US 5,217,736, which describes the use of hydrophobic prolamines, such as zein, to coat foods with a protein latex barrier prior to frying.

US 5,232,721 discloses the use of a protein selected from collagen, gelatine and casein to form a protein barrier to reduce fat uptake by fried foods.

While these technologies have had some success in reducing the fat and/or oil content of battered food products, product quality is significantly reduced to a level that is unacceptable to consumers. The above technologies are largely based on the formation of a barrier to retain moisture and block fat uptake. In particular, HPMC, MC and other gums, such as carboxymethylcellulose gum (CPC) are long chain molecules that gel on heating. The crispness of fried batter coatings is largely due to the product breaking up as the consumer chews the food. However, long chain molecules make the product stronger resulting in a chewy and/or tough texture in the final product.

There is therefore a need in the art for methods and compositions to reduce the uptake of fat and/or oil by fried foods without compromising the levels of product quality that are expected by consumers.

Unless specified otherwise, the terms "fat", "oil" and "fat and/or oil" are used interchangeably herein to refer to edible fats and/or oils of animal or plant origin. Examples of edible oils of plant origin include sunflower oil, rapeseed oil, maize oil, groundnut oil, sesame oil, soybean oil, and palm oil.

Most research relating to reduced uptake of fat and/or oil in fried batter-coated food products is based on single-fry processes, i.e. processes in which a batter-coated food product is fully cooked for consumption in a single frying step. However, it will be appreciated that most pre-prepared batter-coated food products supplied to restaurants and consumers are part-cooked by frying in a factory environment (par-fried) and then fully cooked in a subsequent frying or oven baking step in a commercial or domestic kitchen.

It will be readily understood that absorption of fat and/or oil is of particular concern where the food product is subjected to two frying steps before consumption, as described above, i.e. a first frying step in a factory environment to cook or part-cook the food substrate and to set the batter, and a second frying step to prepare the food product for consumption. It is therefore important that any fat-reducing technology be capable of achieving fat reduction in a fully cooked food product, in the form in which it is consumed. If the fat blocking effect occurs only during the initial part-cooking step, and the end product when fully cooked has a standard fat level, then there is no benefit to the consumer. There is also therefore a need in the art for fat-reducing technologies that are capable of achieving fat reduction over two or more frying steps, and which retain desired taste and textural properties.

Furthermore, as noted above, most of the prior research in this area has focused on fat reduction techniques which lead to reduced product quality, for example taste and texture. The success of any fat reduction technology is highly dependent on the acceptability of the end product to consumers. It is therefore important that any fatreducing technologies provide an end product that is appealing to consumers in terms of taste, texture and appearance.

One proposal for reducing the fat and/or oil uptake of fried foods is disclosed in US 7,163,707. This document discloses a process that uses a protein or peptide composition derived from animal muscle protein. Processes for isolating the protein or peptide compositions used in the above process are described in US 6,005,073, US 6,288,216, and US 6,451,975.

In accordance with US 7,163,707, an acidic solution of the protein or peptide is combined with a wide variety of food types, for example by coating the food with the protein solution, injecting the protein solution into the food, or mixing the protein solution with the food. In particular, it is disclosed that the protein and/or peptide solution may be used in admixture with a number of food additives, including batter coatings. However, a particular disadvantage of the processes disclosed in US 7,163,707 is that acidification of the protein solutions to pH 2.5 to 3.5 is essential. The acidification of the protein solution impairs the flavour of the cooked food product. In addition, a high amount of protein is needed in the batter compositions disclosed, which results in a tough and chewy product which is unacceptable to consumers. In many cases, it is also necessary to add ethanol to the batter composition to obtain acceptable fat reduction. However, the use of ethanol on an industrial scale is hazardous due to its flammability. Further, the cost of the large quantities of protein that are necessary is commercially prohibitive.

Dogan S. F. et al. Eur Food Res Technol (2005) 220:502-508 relates to a study into the effects of soy protein isolate (SPI), whey protein isolate (WPI) and egg albumen (EA) on the quality of deep-fat-fried chicken nuggets. Addition of the different proteins to the batter formulation decreased the oil content of the final product.

The present invention is based on the surprising discovery that a significant reduction in the uptake of fat and/or oil by fried batter-coated food substrates can be obtained when using an edible batter composition comprising a protein and/or peptide mixture derived from animal tissue, where the concentration of alkali metal ions in the edible batter composition is carefully controlled within a selected low range such as defined by the claims.

Without being bound by any particular theory, it is believed that alkali metal ions interfere with the protein structure, limiting its ability to reduce uptake of fat and/or oil. To overcome the presence of alkali metal ions, it is necessary in US 7,163,707 to use large quantities of protein together with acidification merely to obtain an acceptable reduction in the uptake of fat and/or oil without any consideration of product quality. In addition, the use of acids causes a reduction in product quality as discussed above.

It has now surprisingly been found that by controlling the concentration of alkali metal ions in the batter composition, the amount of protein can be reduced without increasing the uptake of fat and/or oil by the batter composition. In addition, acidification of the batter composition has been found to be unnecessary to obtain an acceptable reduction in the uptake of fat and/or oil. As a result of these factors, a batter-coated food product may be obtained which does not suffer from the impairment of taste, texture and appearance that is associated with higher quantities of protein and acidification.

As a further benefit, it has been found that food substrates coated with the edible batter compositions of the present invention may be cooked over two or more frying steps, without affecting the ability of the batter compositions to reduce uptake of fat and/or oil. Accordingly, the batter compositions of the present invention are of particular benefit in the pre-preparation of food products in factories. However, it will be appreciated that the fat reduction is likewise observed in single-fry processes.

Thus, according to a first aspect of the present invention, there is provided an edible batter composition for frying in fat and/or oil, said edible batter composition comprising:
(a) 27 to 57 weight percent flour;
(b) 40 to 70 weight percent water; and
(c) 0.15 to 3.0 weight percent of a protein and/or peptide mixture derived from animal muscular tissue obtained from fish, poultry or meat;
wherein the edible batter composition comprises up to 6 weight percent of an edible fat and/or oil relative to the edible batter composition; and
wherein the edible batter composition comprises less than or equal to 0.030 mol/kg of alkali metal ions.

As used herein, the term "alkali metal ions" refers to the Group I and Group II metal ions that are present in the edible batter compositions of the present invention, in particular those added in the form of leavening agents, seasonings, preservatives, or other additives. In general, the compositions of the present invention comprise predominately sodium, potassium and calcium ions. However, other Group I and Group II metal ions, such as lithium or magnesium ions, may sometimes also be present, although generally in lower quantities than sodium, potassium and calcium ions.

As used herein the term "alkali metal ions" is preferably not interpreted to include trace amounts of alkali metals that are naturally found in flour, although the term does include alkali metals present in additives that are added to certain types of flour, such as the leavening agents found in self-raising flour.

The edible batter compositions of the present invention are suitable for use as batter coatings for food substrates. Such coatings may take the form of adhesion batters or tempura batters, as defined above.

The edible batter compositions of the invention preferably comprise at least 45 weight percent water, and more preferably at least 50 weight percent water. The edible batter compositions of the invention preferably also comprise less than or equal to 65 weight percent water. Thus, the edible batter compositions of the invention preferably comprise from 45 to 65 weight percent water, and more preferably from 50 to 65 weight percent water.

It will be appreciated that references to the water content of the edible batter compositions of the invention do not include the natural moisture content of the flour in the composition.

The edible batter compositions of the present invention may contain up to 2.5 weight percent of the protein and/or peptide mixture, more preferably up to 2.0 weight percent, still more preferably up to 1.5 weight percent of the protein and/or peptide mixture, and most preferably up to 1.0 weight percent of the protein and/or peptide mixture.

Additionally, the edible batter compositions of the present invention may comprise at least 0.25 weight percent of the protein and/or peptide mixture, more preferably at least 0.4 weight percent of the protein and/or peptide mixture, and most preferably at least 0.5 weight percent of the protein and/or peptide mixture.

Thus, the edible batter compositions of the present invention preferably comprise from 0.25 to 2.0 weight percent of the protein and/or peptide mixture, and most preferably from 0.5 to 1.0 weight percent of the protein and/or peptide mixture.

The protein and/or peptide mixture derived from animal muscular tissue is obtained from fish, poultry or meat.

As used herein, the term "fish" is used to refer to the flesh of aquatic species suitable for human consumption, and the term should be interpreted to include finfish, such as cod, pollock, haddock, plaice, whitebait, salmon and trout, as well as shellfish, such as crustaceans and molluscs, for example lobster, shrimp, crab and crayfish.

As used herein, the term "poultry" is used to refer to the flesh of bird species suitable for human consumption, such as chicken, turkey and duck.

As used herein, the term "meat" is used to refer to the flesh of mammalian species suitable for human consumption, to the exclusion of fish and poultry, such as pork, beef, venison, lamb and rabbit.

For example, the muscular tissue may be obtained from cod, pollock, chicken, turkey, duck, pork, beef, or venison. Preferably, the protein and/or peptide mixture is separated from other cellular components of the animal muscle tissue.

Where the edible batter composition is used to coat fish substrates, the protein and/or peptide mixture is preferably derived from fish.

Where the edible batter composition is used to coat poultry substrates, the protein and/or peptide mixture is preferably derived from poultry.

Where the edible batter composition is used to coat meat substrates, the protein and/or peptide mixture is preferably derived from meat.

As used herein, the term "protein" refers to proteins derived from animal muscular tissue without substantial modification of the protein structure. For instance, the proteins may be obtained from the animal muscular tissue by processes such as centrifugation or precipitation. The term "peptide" refers to proteinaceous substances obtained from animal muscle tissue and subjected to subsequent processing to reduce the length of the amino acid chains, typically using a proteolytic enzyme.

In a preferred embodiment the protein and/or peptide mixture is selected from:
(i) a protein mixture of myofibrillar and/or sarcoplasmic proteins derived from animal tissue; and/or
(ii) a peptide mixture prepared by enzymatic degradation of a protein mixture of myofibrillar and/or sarcoplasmic proteins derived from animal tissue.

Preferably, the protein and/or peptide mixture is substantially free of sarcomeres and myofibrils. Sarcomeres and myofibrils comprise strands of tissue which are visible using a microscope, and which are formed primarily of sarcoplasmic and myofibrillar proteins.

The protein and/or peptide mixture is preferably substantially free of membrane lipids and other non-membrane lipids.

Preferably, the protein mixture of myofibrillar and/or sarcoplasmic proteins (i), and/or the protein mixture of myofibrillar and/or sarcoplasmic proteins used to prepare the peptide mixture (ii) contains from 8 to 30 weight percent of sarcoplasmic proteins, more preferably from 10 to 30 weight percent of sarcoplasmic proteins, still more preferably from 15 to 30 weight percent of sarcoplasmic proteins, and most preferably from 18 to 30 weight percent of sarcoplasmic proteins.

The protein mixture of myofibrillar and/or sarcoplasmic proteins derived from animal tissue may be obtained by a process comprising the steps of: (i) providing particulate animal muscle tissue, where the particulate animal tissue is preferably free of internal organs, intestines and head of an animal; (ii) suspending the particulate animal muscle tissue in an aqueous acidic solution or an aqueous basic solution at a pH effective to solubilise a major proportion, and preferably substantially all of the available protein in the animal muscle tissue.

In step (ii), the pH of the aqueous acidic solution is preferably in the range of from 2.5 to 3.5, and the pH of the aqueous basic solution is preferably in the range from 10.5 to 11.5. Use of an aqueous acidic or basic solution in these pH ranges has the advantage that the myofibril and sarcomere tissue structure is substantially completely converted to solubilised protein so that the protein product is substantially free of myofibrils and sarcomeres. However, the pH is not so acidic or basic as to effect substantial degradation of the myofibrillar and sarcoplasmic proteins.

Preferably, the process further comprises the step of (iii) precipitating the proteins from the aqueous solution by adjusting the pH to a pH in the range of from 5.0 to 5.5 or by increasing the ion strength of the protein solution, or drying the protein solution (e.g. by spray drying). However, in some cases the acidic or basic protein solution can be used directly in the preparation of edible batter compositions according to the invention without further treatment.

Preferably, step (ii) further comprises the step of separating the solubilised proteins from insoluble materials, membrane lipids and other non-membrane lipids, for example by centrifugation.

The proteins may be further treated with a proteolytic enzyme to form the peptide mixture prepared by enzymatic degradation of a protein mixture of myofibrillar and sarcoplasmic proteins derived from animal tissue referred to above.

Protein and/or peptide mixtures of the type described above, and processes for obtaining them, are well-known to those of skill in the art. Reference in this regard is made to the disclosure of US Patent No. 6,005,073, US Patent No. 6,288,216, and US Patent No. 6,451,975.

Protein and/or peptide mixtures derived from animal muscular tissue are commercially available from Proteus Industries (Massachusetts, USA) under the trade name NutriLean®.

As used throughout the present application in relation to the present invention, the term "protein" should be understood to refer to the protein and/or peptide mixture described above, unless stated otherwise.

As noted above, the edible batter compositions of the present invention comprise less than or equal to 0.030 mol/kg of alkali metal ions. Preferably, the edible batter compositions comprise less than or equal to 0.029 mol/kg of alkali metal ions, more preferably less than or equal to 0.028 mol/kg of alkali metal ions, more preferably less than or equal to 0.027 mol/kg of alkali metal ions, even more preferably less than or equal to 0.026 mol/kg of alkali metal ions, even more preferably less than or equal to 0.025 mol/kg of alkali metal ions, still more preferably less than or equal to 0.024 mol/kg of alkali metal ions, still more preferably less than or equal to 0.023 mol/kg of alkali metal ions, still even more preferably less than or equal to 0.022 mol/kg of alkali metal ions, still even more preferably less than or equal to 0.021 mol/kg of alkali metal ions, and most preferably less than or equal to 0.020 mol/kg of alkali metal ions.

The edible batter compositions of the invention may preferably comprise at least 0.010 mol/kg of alkali metal ions, preferably at least 0.011 mol/kg of alkali metal ions, more preferably at least 0.012 mol/kg of alkali metal ions, more preferably at least 0.013 mol/kg of alkali metal ions, even more preferably, at least 0.014 mol/kg of alkali metal ions, even more preferably at least 0.015 mol/kg of alkali metal ions, still more preferably at least 0.016 mol/kg of alkali metal ions, still more preferably at least 0.017 mol/kg of alkali metal ions, and most preferably at least 0.018 mol/kg of alkali metal ions.

Where the edible batter compositions of the invention comprise from 0.15 to 0.29 weight percent of the protein and/or peptide mixture, they preferably comprise from 0.010 to 0.021 mol/kg of alkali metal ions.

Where the edible batter compositions of the invention comprise from 0.30 to 0.59 weight percent of the protein and/or peptide mixture, they preferably comprise from 0.010 to 0.022 mol/kg of alkali metal ions.

Where the edible batter compositions of the invention comprise from 0.60 to 0.89 weight percent of the protein and/or peptide mixture, they preferably comprise from 0.010 to 0.023 mol/kg of alkali metal ions.

Where the edible batter compositions of the invention comprise from 0.90 to 1.19 weight percent of the protein and/or peptide mixture, they preferably comprise from 0.010 to 0.024 mol/kg of alkali metal ions.

Where the edible batter compositions of the invention comprise from 1.20 to 1.49. weight percent of the protein and/or peptide mixture, they preferably comprise from 0.010 to 0.025 mol/kg of alkali metal ions.

Where the edible batter compositions of the invention comprise from 1.50 to 1.79 weight percent of the protein and/or peptide mixture, they preferably comprise from 0.010 to 0.026 mol/kg of alkali metal ions.

Where the edible batter compositions of the invention comprise from 1.80 to 2.09 weight percent of the protein and/or peptide mixture, they preferably comprise from 0.010 to 0.027 mol/kg of alkali metal ions.

Where the edible batter compositions of the invention comprise from 2.10 to 2.39 weight percent of the protein and/or peptide mixture, they preferably comprise from 0.010 to 0.028 mol/kg of alkali metal ions.

Where the edible batter compositions of the invention comprise from 2.40 to 2.69 weight percent of the protein and/or peptide mixture, they preferably comprise from 0.010 to 0.029 mol/kg of alkali metal ions.

Where the edible batter compositions of the invention comprise from 2.70 to 3.0 weight percent of the protein and/or peptide mixture, they preferably comprise from 0.010 to 0.030 mol/kg of alkali metal ions.

In many applications, edible batters, particularly tempura batters, contain a leavening system to provide desirable visual and textural properties to the cooked batter, increasing its appeal to consumers. In some cases, a leavening system may also be used in adhesion batters. As used herein, the term "leavening system" refers to any of a number of chemical and/or biological substances which release gas bubbles (usually carbon dioxide), which expand on heating so as to provide an open, airy texture to the cooked batter.

The edible batter compositions of the present invention may further comprise a leavening system, and preferably a chemical leavening system.

Chemical leavening systems suitable for use according to the present invention generally comprise at least one alkaline leavening agent and at least one acidic leavening agent which react together to form carbon dioxide gas.

Examples of suitable alkaline leavening agents which may be used according to the present invention include sodium bicarbonate, sodium carbonate, ammonium bicarbonate, ammonium carbonate, potassium bicarbonate, potassium carbonate, and potassium bitartrate.

Examples of suitable acidic leavening agents which may be used according to the present invention include monocalcium phosphate, dicalcium phosphate, monosodium phosphate, sodium aluminium phosphate, and sodium acid pyrophosphate.

Preferably, the chemical leavening system comprises sodium bicarbonate, sodium acid pyrophosphate and monocalcium phosphate.

It will be appreciated that a number of the chemical leavening agents mentioned above comprise alkali metals. Preferably, where a chemical leavening system is used, the chemical leavening system supplies greater than 90 weight percent of the alkali metal ions in the edible batter composition, and more preferably greater than 95 weight percent of the alkali metal ions in the edible batter composition. In this way, the desirable leavening effect can be maximised within the limits for the alkali metal content required by the invention and thus without increasing fat uptake. The use of flavour enhancers, such as sodium chloride, reduces the amount of leavening agent that may be used and therefore often results in a poorer quality product.

Where leavening agents are used, it is preferable that the water used to prepare the edible batter compositions of the invention is below ambient temperature, for example below 20 °C, more preferably below 15 °C, and most preferably between 5 °C and 10 °C. In this way, reaction of the leavening agents prior to cooking the batter composition is suppressed, increasing the leavening effect that is obtained on cooking.

Where the batter composition of the invention is for use as an adhesion batter, the edible batter composition may be free of leavening agents.

As with all conventional edible batter compositions, the edible batter compositions of the present invention comprise a 'flour' component to provide structure to the batter composition. A variety of different flours can be used, and the type of flour can be selected to give a variety of tastes, textures and appearances to the cooked batter.

Particularly useful flour types include wheat flour, maize flour, rice flour and soya flour. Typically, the flour used to form the edible batter compositions of the present invention comprises:
(i) from 0 to 100 weight percent wheat flour, for example from 10 to 90 weight percent wheat flour, or from 20 to 80 weight percent wheat flour, or from 30 to 70 weight percent wheat flour;
(ii) from 0 to 100 weight percent maize flour, for example from 10 to 90 weight percent maize flour, or from 20 to 80 weight percent maize flour, or from 30 to 70 weight percent maize flour; and
(iii) from 0 to 30 weight percent rice flour, for example 0 to 20 weight percent rice flour, or from 0 to 10 weight percent rice flour.

Edible batter compositions containing flour as described above are of general applicability. These compositions may for instance be used for coating meat substrates.

The choice of flour used depends on a number of factors, including the taste and texture desired in the cooked batter composition, as well as processing requirements (for example degree of adhesion, and suitability for freezing, storage and reheating). In general, the edible batter compositions of the invention may be used across a wide range of food substrates. However, certain types of flour may be more preferred than others for certain food substrates.

In some cases it is desirable that the flour comprises predominantly wheat flour. For example, the flour used to form the edible batter compositions of the present invention may comprise:
(i) from 40 to 100 weight percent wheat flour, for example from 50 to 90 weight percent wheat flour, or from 60 to 80 weight percent wheat flour;
(ii) from 0 to 50 weight percent maize flour, for example from 10 to 40 weight percent maize flour, or from 20 to 30 weight percent maize flour; and
(iii) from 0 to 30 weight percent rice flour, for example 0 to 20 weight percent rice flour, or from 0 to 10 weight percent rice flour.

Edible batter compositions containing a high content of wheat flour are particularly suitable for coating fish substrates.

In other cases it is desirable that the flour comprises predominantly maize flour. For example, the flour used to form the edible batter compositions of the present invention may comprise:
(i) from 0 to 50 weight percent wheat flour, for example from 10 to 40 weight percent wheat flour, or from 20 to 30 weight percent wheat flour;
(ii) from 40 to 100 weight percent maize flour, for example from 50 to 90 weight percent maize flour, or from 60 to 80 weight percent maize flour; and
(iii) from 0 to 30 weight percent rice flour, for example 0 to 20 weight percent rice flour, or from 0 to 10 weight percent rice flour.

Edible batter compositions containing a high content of maize flour are particularly suitable for coating chicken substrates.

The properties of the edible batter compositions of the present invention may be modified by the addition of starches. References to starches herein relate to starches which are used in addition to the flour, and should not be interpreted so as to include the starch which is naturally present in the flour. The use of starches provides additional structure to the cooked batter compositions, further improving the taste and texture of the cooked batter.

The edible batter compositions may further comprise from 1.5 to 18 weight percent of native or modified starch. Preferably, the edible batter compositions comprise from 3 to 15 weight percent of native or modified starch, and more preferably from 6 to 12 weight percent of native or modified starch.

As used herein "native starch" refers to starch recovered in the original form (i.e. unmodified) from a starch-bearing crop. Native starch may be contrasted with modified starch, which has undergone some degree of chemical and/or physical modification. Examples of starches which may be used according to the present invention include: native wheat starch, modified wheat starch, native maize starch, modified maize starch, native rice starch, modified rice starch, native pea starch, modified pea starch, native tapioca starch, modified tapioca starch, native potato starch, and/or modified potato starch.

The edible batter compositions of the present invention may further comprise one or more colouring agents to improve the visual appeal of the cooked batter. In particular, the colour of the batter can reflect the flavour of the food product, for example a hint of yellow for a lemon flavoured product. Examples of suitable colouring agents include: milk powder, skim milk powder, whey powder, dextrose, lactose, turmeric and/or paprika. Where colouring agents are used, they are preferably used in an amount of up to 10 weight percent of the edible batter composition.

The edible batter compositions of the present invention may optionally comprise seasonings, for example pepper. However, the use of salt is avoided so as not to increase the alkali metal content of the edible batter compositions beyond the levels required by the invention.

The edible batter compositions of the present invention may further comprise an edible fat and/or oil component. The use of an edible fat and/or oil component may improve the taste and/or texture of the cooked batter. In addition, the use of an oil component may provide processing advantages as discussed below. The edible fat and/or oil component is used in an amount of up to 6 weight percent of the edible batter composition. However, consistent with the aim of the invention to reduce the fat content of the cooked batter compositions, the edible fat and/or oil component is preferably used
in an amount of up to 4.5 weight percent of the edible batter composition, and more preferably up to 3 weight percent of the edible batter composition.

A beaded hard fat component may be used, for example an animal fat or a solid vegetable oil. The beaded hard fat melts when the batter is cooked to provide a more open texture to the cooked batter.

Alternatively, or in addition, a liquid vegetable oil may be used. For example, the edible batter composition may comprise at least one of sunflower oil, rapeseed oil, maize oil, groundnut oil, sesame oil, soybean oil, and palm oil.

Further reduction in the fat content of the cooked batter composition may be obtained by adding up to 5 weight percent of ethanol to the edible batter compositions of the present invention. However, in some food preparation environments the use of ethanol may be regarded as a fire hazard. Thus, in a further embodiment, the edible batter compositions of the present invention do not contain added ethanol.

The pH of the edible batter compositions of the present invention is preferably in the range of from 2.5 to 12.0. However, more acidic or alkaline batter compositions provide cooked batters having an unpleasant taste due to the presence of the pH modifying agents. For example, citric acid or phosphoric acid are conventionally used as acidifying agents, but impart a flavour which is unpleasant to consumers. Accordingly, the pH of the edible batter compositions is preferably in the range of from 4.0 to 10.0, and more preferably in the range of from 5.0 to 9.0. Preferably, the edible batter composition is free of additional acidifying or basifying agents, other than those required as part of the chemical leavening system.

One preferred edible batter composition according to the invention comprises:
(i) 35 to 45 weight percent of wheat flour and maize flour in a weight ratio of from 40:60 to 60:40;
(ii) 50 to 60 weight percent water;
(iii) 0.4 to 1.0 weight percent of a protein and/or peptide mixture as described above;
(iv) 2 to 6 weight percent starch, preferably wheat starch;
(v) 0.15 to 0.3 weight percent of a mixture of sodium acid pyrophosphate and sodium bicarbonate in approximately neutralising amounts;
(vi) 0 to 3 weight percent whey powder; and
(vii) 0 to 0.5 weight percent of black pepper.

This edible batter composition is particularly useful for coating chicken substrates. As noted above, the protein and or peptide mixture is preferably derived from chicken when the edible batter composition is used to coat chicken substrates.

Another preferred edible batter composition according to the invention comprises:
(i) 35 to 45 weight percent of wheat flour and maize flour in a weight ratio of from 10:90 to 30:70;
(ii) 50 to 60 weight percent water;
(iii) 0.4 to 1.0 weight percent of a protein and/or peptide mixture as described above;
(iv) 2 to 6 weight percent starch, preferably wheat starch;
(v) 0.15 to 0.3 weight percent of a mixture of sodium acid pyrophosphate and sodium bicarbonate in approximately neutralising amounts; and
(vi) 0 to 3 weight percent whey powder.

This edible batter composition is particularly useful for coating fish substrates. As noted above, the protein and or peptide mixture is preferably derived from fish when the edible batter composition is used to coat fish substrates.

In another aspect, the present invention provides precursor compositions for preparing the edible batter compositions defined above, the precursor compositions comprising:
(a) 45 to 95 weight percent flour; and
(b) 0.25 to 5.0 weight percent of a dry protein and/or peptide mixture derived from animal muscular tissue,
and wherein the precursor compositions comprise less than or equal to 0.050 mol/kg of alkali metal

ions and wherein the precursor composition comprises up to 10 weight percent of an edible fat and/or oil relative to the precursor composition.

In general, the precursor compositions are substantially dry, substantially powder compositions that may be reconstituted with water to provide the edible batter compositions defined above. As used herein, the term "substantially dry" should be interpreted as meaning that the precursor compositions of the invention comprise no more than 10 weight percent of water, more preferably no more than 5 weight percent of water, not including moisture that is naturally present in flour.

The precursor compositions of the present invention may be used to prepare adhesion batters or tempura batters.

The precursor compositions preferably contain up to 4.1 weight percent of the protein and/or peptide mixture, more preferably up to 3.4 weight percent, still more preferably up to 2.5 weight percent of the protein and/or peptide mixture, and most preferably up to 1.7 weight percent of the protein and/or peptide mixture.

The precursor compositions preferably comprise at least 0.4 weight percent of the protein and/or peptide mixture, more preferably at least 0.67 weight percent of the protein and/or peptide mixture, and most preferably at least 0.8 weight percent of the protein and/or peptide mixture.

Thus, the precursor compositions preferably comprise from 0.4 to 3.4 weight percent of the protein and/or peptide mixture, and more preferably from 0.8 to 1.7 weight percent of the protein and/or peptide mixture.

As noted above, the precursor compositions of the present invention comprise less than or equal to 0.050 mol/kg of alkali metal ions. Preferably, the precursor compositions of the invention comprise less than or equal to 0.048 mol/kg of alkali metal ions, more preferably less than or equal to 0.047 mol/kg of alkali metal ions, more preferably less than or equal to 0.045 mol/kg of alkali metal ions, even more preferably less than or equal to 0.043 mol/kg of alkali metal ions, even more preferably less than or equal to 0.042 mol/kg of alkali metal ions, still more preferably less than or equal to 0.040 mol/kg of alkali metal ions, still more preferably less than or equal to 0.038 mol/kg of alkali metal ions, still even more preferably less than or equal to 0.037 mol/kg of alkali metal ions, still even more preferably less than or equal to 0.035 mol/kg of alkali metal ions, and most preferably less than or equal to 0.033 mol/kg of alkali metal ions.

The precursor compositions of the invention may preferably comprise at least 0.017 mol/kg of alkali metal ions, more preferably at least 0.018 mol/kg of alkali metal ions, more preferably at least 0.020 mol/kg of alkali metal ions, even more preferably at least 0.022 mol/kg of alkali metal ions, still more preferably, at least 0.023 mol/kg of alkali metal ions, and most preferably at least 0.025 mol/kg of alkali metal ions.

Where the edible batter compositions of the invention comprise from 0.25 to 0.49 weight percent of the protein and/or peptide mixture, they preferably comprise from 0.017 to 0.035 mol/kg of alkali metal ions.

Where the precursor compositions of the invention comprise from 0.50 to 0.99 weight percent of the protein and/or peptide mixture, they preferably comprise from 0.017 to 0.037 mol/kg of alkali metal ions.

Where the precursor compositions of the invention comprise from 1.00 to 1.49 weight percent of the protein and/or peptide mixture, they preferably comprise from 0.017 to 0.038 mol/kg of alkali metal ions.

Where the precursor compositions of the invention comprise from 1.50 to 1.99 weight percent of the protein and/or peptide mixture, they preferably comprise from 0.017 to 0.040 mol/kg of alkali metal ions.

Where the precursor compositions of the invention comprise from 2.00 to 2.49. weight percent of the protein and/or peptide mixture, they preferably comprise from 0.017 to 0.042 mol/kg of alkali metal ions.

Where the precursor compositions of the invention comprise from 2.50 to 2.99 weight percent of the protein and/or peptide mixture, they preferably comprise from 0.017 to 0.043 mol/kg of alkali metal ions.

Where the precursor compositions of the invention comprise from 3.00 to 3.49 weight percent of the protein and/or peptide mixture, they preferably comprise from 0.017 to 0.045 mol/kg of alkali metal ions.

Where the precursor compositions of the invention comprise from 3.50 to 3.99 weight percent of the protein and/or peptide mixture, they preferably comprise from 0.017 to 0.047 mol/kg of alkali metal ions.

Where the precursor compositions of the invention comprise from 4.00 to 4.49 weight percent of the protein and/or peptide mixture, they preferably comprise from 0.017 to 0.048 mol/kg of alkali metal ions.

Where the precursor compositions of the invention comprise from 4.50 to 5.0 weight percent of the protein and/or peptide mixture, they preferably comprise from 0.017 to 0.050 mol/kg of alkali metal ions.

The precursor compositions of the present invention may further comprise a chemical or biological leavening system. As noted above, a chemical or biological leavening system is of particular benefit when the precursor compositions of the invention are used to prepare a tempura batter as defined above. However, in some cases, a leavening agent may also be used where the precursor compositions of the invention are used to prepare an adhesion batter as defined above.

The leavening system is preferably a chemical leavening system as described above. The chemical leavening system preferably supplies greater than 90 weight percent of the alkali metal ions in the precursor compositions, and more preferably greater than 95 weight percent of the alkali metal ions in the precursor compositions, so as to maximise the content of the leavening agent in the precursor compositions without exceeding the maximum alkali metal content of the precursor compositions required by the invention.

The flour used in the precursor compositions of the present invention preferably comprises one or more of wheat flour, maize flour, rice flour and soya flour. Typically, the flour used to form the precursor compositions of the present invention comprises:
(i) from 0 to 100 weight percent wheat flour, for example from 10 to 90 weight percent wheat flour, or from 20 to 80 weight percent wheat flour, or from 30 to 70 weight percent wheat flour;
(ii) from 0 to 100 weight percent maize flour, for example from 10 to 90 weight percent maize flour, or from 20 to 80 weight percent maize flour, or from 30 to 70 weight percent maize flour; and
(iii) from 0 to 30 weight percent rice flour, for example 0 to 20 weight percent rice flour, or from 0 to 10 weight percent rice flour.

Precursor compositions containing flour as described above are of general applicability. These compositions may for instance be used for coating meat substrates.

As noted above, the choice of flour used depends on a number of factors, including the taste and texture desired in the cooked batter composition, as well as processing requirements (for example degree of adhesion, and suitability for freezing, storage and reheating).

Thus, the flour may comprise predominantly wheat flour. For example, the flour used to form the precursor compositions of the present invention could comprise:
(i) from 40 to 100 weight percent wheat flour, for example from 50 to 90 weight percent wheat flour, or from 60 to 80 weight percent wheat flour;
(ii) from 0 to 50 weight percent maize flour, for example from 10 to 40 weight percent maize flour, or from 20 to 30 weight percent maize flour; and
(iii) from 0 to 30 weight percent rice flour, for example 0 to 20 weight percent rice flour, or from 0 to 10 weight percent rice flour.

The flour may alternatively comprise predominantly maize flour. For example, the flour used to form the precursor compositions of the present invention could comprise:
(i) from 0 to 50 weight percent wheat flour, for example from 10 to 40 weight percent wheat flour, or from 20 to 30 weight percent wheat flour;
(ii) from 40 to 100 weight percent maize flour, for example from 50 to 90 weight percent maize flour, or from 60 to 80 weight percent maize flour; and
(iii) from 0 to 30 weight percent rice flour, for example 0 to 20 weight percent rice flour, or from 0 to 10 weight percent rice flour.

The precursor compositions of the present invention may further comprise a starch component. As above, references to starches herein relate to starches which are used in addition to the flour, and should not be interpreted so as to include the starch which is naturally present in the flour.

Thus, the precursor compositions of the present invention may further comprise from 2.5 to 30 weight percent of native or modified starch. Preferably, the precursor compositions comprise from 5 to 25 weight percent of native or modified starch, and more preferably from 10 to 20 weight percent of native or modified starch. Examples of suitable starches are provided above.

The precursor compositions of the present invention may further comprise one or more colouring agents. For example, the colouring agents may be selected from: milk powder, skim milk powder, whey powder, dextrose, lactose, turmeric extract and/or paprika extract. Where colouring agents are used, they are preferably used in an amount of up to 16 weight percent of the precursor composition.

The precursor compositions of the present invention may optionally comprise seasonings, for example pepper. However, the use of salt is avoided so as not to increase the alkali metal content of the precursor compositions beyond the levels required by the invention.

The precursor compositions of the present invention may further comprise an edible fat and/or oil component as described above. The edible fat and/or oil component is used in an amount of up to 10 weight percent of the precursor composition.

The precursor compositions of the present invention preferably provide edible batter compositions having a pH in the range of from 2.5 to 12.0 when 40 to 70 parts by weight of water are added to 60 to 30 parts by weight of the precursor composition, to obtain a total of 100 parts by weight. More preferably, the precursor compositions provide edible batter compositions having a pH in the range of from 4.0 to 10, for example in the range of from 5.0 to 9.0, when 40 to 70 parts by weight of water are added to 60 to 30 parts by weight of the precursor composition, to obtain a total of 100 parts by weight.

In some cases it may be preferred that the precursor compositions of the present invention provide edible batter compositions having a pH in the range of from 4.0 to 6.5, and more preferably in the range of from 4.5 to 5.5.

In other cases it may be preferred that the precursor compositions of the present invention provide edible batter compositions having a pH in the range of from 7.5 to 10.0, and more preferably in the range of from 8.0 to 9.0.

Preferably, the precursor compositions are free of additional acidifying or basifying agents, other than those required as part of the chemical leavening system.

One preferred precursor composition according to the invention comprises:
(i) 82 to 92 weight percent of wheat flour and maize flour in a weight ratio of from 40:60 to 60:40;
(ii) 0.9 to 2.2 weight percent of a protein and/or peptide mixture as described above;
(iii) 5 to 15 weight percent starch, preferably wheat starch;
(iv) 0.3 to 0.7 weight percent of a mixture of sodium acid pyrophosphate and sodium bicarbonate in approximately neutralising amounts;
(v) 0 to 5 weight percent whey powder; and
(vi) 0 to 1.0 weight percent of black pepper.

This precursor composition is particularly useful for the preparation of edible batter compositions for coating chicken substrates. As noted above, the protein and or peptide mixture is preferably derived from chicken when the edible batter composition is used to coat chicken substrates.

Another preferred precursor composition according to the invention comprises:
(i) 82 to 92 weight percent of wheat flour and maize flour in a weight ratio of from 10:90 to 30:70;
(ii) 0.9 to 2.2 weight percent of a protein and/or peptide mixture as described above;
(iii) 5 to 15 weight percent starch, preferably wheat starch;
(iv) 0.3 to 0.7 weight percent of a mixture of sodium acid pyrophosphate and sodium bicarbonate in approximately neutralising amounts; and
(v) 0 to 5 weight percent whey powder.

This precursor composition is particularly useful for the preparation of edible batter compositions for coating fish substrates. As noted above, the protein and or peptide mixture is preferably derived from fish when the edible batter composition is used to coat fish substrates.

The precursor compositions of the invention may be mixed using standard ribbon mixers or paddle mixers that are known in the art. Under standard operating conditions, such mixers may be used to mix batches of 500kg to 1500kg of dry batter compositions, such as the precursor compositions of the invention. A typical mixing time of from 1.5 to 2 minutes is used with the mixer operating at standard operating speed. The mixing time may be up to three minutes for dry batter compositions comprising oil.

In general, the edible batter compositions of the present invention may be prepared simply by combining the components mentioned above to form a slurry, for example in a food mixer. Preferably, the edible batter compositions of the present invention may be prepared by combining 40 to 70 parts by weight of water with 60 to 30 parts by weight of a precursor composition as defined above, to obtain a total of 100 parts by weight. More preferably, 45 to 65 parts by weight of water are combined with 55 to 35 parts by weight of a precursor composition as defined above, to obtain a total of 100 parts by weight. Still more preferably, 50 to 65 parts by weight of water are combined with 50 to 35 parts by weight of a precursor composition as defined above, to obtain a total of 100 parts by weight.

The edible batter compositions of the present invention may typically be prepared by two different types of mixing: (i) automatic mixing - a viscosity is preset and a mixing machine mixes the batter composition to the required viscosity - this can be a batch process or a continuous process; or (ii) manual mixing - set amounts of water and dry batter components are manually added to a mixing machine.

Most commercial food factories use the automatic method due to the large volumes of batter that are processed. Mixing may be done by a high shear mixing blade, or some mixers work by passing the components of the batter mix through a pump. There is also a method of mixing wherein the dry batter components are dropped into a water vortex for low shear mixing. Such methods are well within the knowledge of the person of skill in the art.

As noted above, the edible batter compositions of the present invention are preferably mixed using cold water to minimise reaction of the raising agents before frying. It is also preferred that gentle shear mixing is used with minimal mixing times, as over-mixing can result in a significant proportion of the raising agents reacting in the batter mixer. Incorrect mixing does not have an effect on the fat reduction obtained using the edible batter compositions of the invention, however it may have a negative effect of the texture of the cooked batter.

In some cases it has been found that a further fat reduction may be obtained by preparing the edible batter compositions of the present invention in specific ways. More specifically, it has been found that a further improvement in fat reduction is obtained by preparing the edible batter compositions of the present invention in ways which ensure that the protein and/or peptide component is fully hydrated by the water component. It is believed that simply combining the individual components may lead to a situation where the other components of the edible batter compositions of the present invention compete with the protein and/or peptide component for the water, such that the protein may not be fully hydrated. The present inventors have therefore also developed precursor compositions and methods of preparing the compositions of the present invention which ensure that the protein component in the edible batter compositions of the present invention is fully hydrated.

The present invention therefore also provides precursor compositions comprising an edible oil component as defined above, wherein the precursor compositions may be prepared by a process that comprises the steps of:
(i) mixing all of the components of the precursor composition except for the protein and/or peptide mixture in a mixing apparatus so as to form a blended composition coated by the edible fat and/or oil; and
(ii) mixing the dry protein and/or peptide mixture with the blended composition from step (i) such that the dry protein and/or peptide mixture remains substantially uncoated by the edible fat and/or oil.

This precursor composition may be combined with water as described above to form an edible batter composition according to the present invention.

Preferably, the mixing in step (i) is continued until such a point that the blended composition has a uniform consistency. By "uniform consistency" is meant that the components of the blended composition are dispersed such that further mixing of the composition will not produce a composition of greater uniformity.

Typically the mixing time in step (ii) is approximately 5 to 40 % of the mixing time required to obtain a uniform consistency in step (i), more preferably, 5 to 30 % of the mixing time in step (i), still more preferably, 5 to 20 % of the mixing time in step (i), and most preferably, 5 to 10 % of the mixing time in step (i). In addition, the mixing in step (ii) is preferably carried out with mixing at a slower speed than in step (i), for instance with mixing at half the speed of step (i). These conditions ensure that the dry protein and/or peptide mixture remains substantially uncoated by the edible fat and/or oil.

When using a ribbon or paddle mixer as described above to prepare precursor compositions according to the process described above, a uniform consistency in step (i) is usually obtained after a period of 4 to 5 minutes mixing. After the protein and/or peptide mixture has been added, the resulting mixture may be blended for up to 2 minutes further, for example up to 1.5 minutes further, at half the standard operating speed, to provide a precursor composition in which the dry protein and/or peptide mixture remains substantially uncoated by the edible fat and/or oil.

It is believed that the coating of oil that is provided over the components of the precursor composition except for the protein and/or peptide mixture slows down the interaction of those components with water. The protein and/or peptide mixture is substantially uncoated by the edible oil. When water is added to the precursor composition, the protein is able to hydrate fully without having to compete with the remaining components of the edible batter compositions for water.

In another aspect, the present invention provides a method of preparing an edible batter composition as defined above, the method comprising the steps of:
(i) dissolving the protein and/or peptide mixture in the water to form a protein and/or peptide solution; and
(ii) combining the protein and/or peptide solution from step (i) with the remaining components of the edible batter composition to form a slurry.

In this aspect of the invention, the protein and/or peptide mixture is dissolved in the water prior to contact with the remaining components of the edible batter composition and therefore is able to hydrate fully without competition for water.

In a further aspect, the present invention provides a method of preparing a food product comprising providing a food substrate with a coating layer of an edible batter composition as defined in any aspect of the present invention, and frying the batter-coated food substrate in oil and/or fat to provide a cooked or part-cooked batter-coated food substrate.

It has been found that food products prepared using the edible batter compositions according to any aspect of the present invention, typically absorb 15 to 50 percent less fat and/or oil during frying, for example 25 to 35 percent less fat and/or oil, than other known batter compositions. The fat reduction is also greater than for batter compositions comprising protein and/or having large amounts of alkali metal ions.

In accordance with the present invention, the food substrate may, for example, be selected from fish, poultry, meat, vegetable or fruit.

In accordance with this aspect of the invention:
- The term "fish" is used to refer to the flesh of aquatic species suitable for human consumption, and the term should be interpreted to include finfish, such as cod, pollock, haddock, plaice, whitebait, salmon and trout, as well as shellfish, such as crustaceans and molluscs, for example lobster, shrimp, crab and crayfish.
- The term "poultry" is used to refer to the flesh of bird species suitable for human consumption, such as chicken, turkey and duck.
- The term "meat" is used to refer to the flesh of mammalian species suitable for human consumption, to the exclusion of fish and poultry, such as pork, beef, venison, lamb and rabbit.

The food substrates used according to the invention may be whole or they may be formed. An example of a whole food substrate would be chicken breast fillet; the fillet is cut from the chicken. A formed substrate is often a cheaper product, a formed chicken breast will be made from minced chicken meat moulded or pressed into the shape of a chicken breast.

Where the food substrate is selected from fish, poultry or meat, it is preferred that the protein and/or peptide mixture is derived from the same type of animal source as the food substrate. Thus, where the food substrate is selected from poultry, the protein and/or peptide mixture is also preferably derived from poultry; where the food substrate is selected from fish, the protein and/or peptide mixture is also preferably derived from fish; and where the food substrate is selected from meat, the protein and/or peptide mixture is also preferably derived from meat.

In many commercial environments, food products are prepared in a factory and then chilled or frozen before being supplied to restaurants or to domestic consumers, and subsequently defrosted and/or reheated and/or fully cooked in the restaurant or in domestic kitchens. Accordingly, this aspect of the present invention may therefore comprise a further step in which the cooked or part-cooked batter-coated food substrate is subsequently chilled or frozen. Where the chilled or frozen batter-coated food substrate is cooked, it may be reheated for consumption by frying in oil and/or fat and/or by oven baking.

As noted above, the edible batter compositions of the present invention comprise a low molar concentration of alkali metal ions. In particular, the use of salt as a flavour enhancer in the edible batter compositions of the invention is preferably avoided as this reduces the amount of alkali metal-containing leavening agents that may be used. In some cases, however, this can result in a batter coating which is not as flavourful as consumers would expect. Thus, where the cooked or part-cooked batter-coated food substrate is subsequently frozen, this aspect of the invention may further comprise the step of spraying the frozen batter-coated food substrate with a flavour-enhancing quantity of salt water before or after freezing the batter-coated food substrate. The salt water freezes on contact with the frozen batter-coated food substrate, and provides an immediate salt flavour when the batter-coated food substrate is prepared for consumption (either by reheating, as above, of by further cooking as described below). Further, by providing the salt after the batter-coated food substrate has been cooked or part-cooked, the additional salt does not lead to an increase in the fat content of the food product, even where a subsequent frying step is used.

The methods of the present invention may also comprise a further step in which the, optionally chilled or frozen, part-cooked batter-coated food substrate is subsequently fully cooked by frying in oil and/or fat and/or by oven baking. In this regard, it is noted that not only are the edible batter compositions of the present invention capable of reducing fat uptake by coated food products that are cooked by a method involving a single frying step (i.e. which are fully cooked in a single frying step, or which are part-cooked by frying and then fully cooked by oven baking), a fat reduction is also observed when the food product is cooked by two or more frying steps (for instance, a first frying step in a factory to part-cook the food product, and a second frying step in a restaurant or a domestic kitchen to fully cook the food product for consumption). It will be understood that the present invention also includes two or more cooking steps where the first step is a frying step and the second is a baking step. Other combinations will immediately be evident.

In its simplest form, the method of preparing a food product according to the present invention may simply comprise applying the edible batter composition of the invention directly to the surface of the food substrate and subsequently frying the coated food substrate in fat and/or oil to provide the cooked or part-cooked batter-coated food substrate. However, in practice, this often results in low pick-up of the edible batter composition and poor adhesion of the edible batter composition coating to the food substrate. More preferably, therefore, the food substrate is provided with a number of coating layers of which at least one layer is of an edible batter composition according to the present invention, as defined above.

Preferably, where the food substrate is provided with a plurality of coating layers, at least the outer coating layer is of an edible batter composition according to the present invention.

In addition to the edible batter compositions of the present invention, the coatings that may be applied to the food substrates in accordance with this aspect of the invention include a predust layer, one or more layers of a conventional batter composition and one or more layers of an intermediate.

As used herein, the term "predust" refers to a blend of dry ingredients, usually based on flour, starches, or breadcrumbs. The purpose of a predust is to dry the surface of a wet food substrate to improve the adhesion of the batter compositions. Wet batter compositions often adhere poorly to wet food substrates.

For example, a conventional predust composition may comprise wheat flour and/or maize flour and/or rice flour, optionally with the addition of starch to improve adhesion and cohesion. For example wheat, maize, tapioca or potato starches may be used, both in native and modified forms. Adhesive starches are often modified and are used at medium to high levels in the predust to provide the best results, with 20 to 40 weight percent being typical. The predust may also comprise dry protein, for example wheat gluten, egg protein or dairy protein. Protein in the predust adheres to protein in the substrate, significantly improving the adhesion of the predust, even where low quantities of protein are used.

Predusts may also comprise basic breadcrumb, or rusk. Rusk comes in a variety of particle sizes and may be used on its own as a cheap predust, or as a carrier for other functional ingredients or flavourings. Rusk is very dry and can absorb large quantities of water, and this quality makes it particularly suitable as a predust. It is often used oiled as it can be extremely dusty.

As used herein, the term "intermediate" refers to a granulated flowing powder based on, for example, breadcrumbs, flour, rusk, corn meal, or cracker meal. Intermediates are used as a cheap way to add bulk and weight to a food product. They are usually used between an adhesion batter and a tempura batter, but can also be used between a predust and a tempura batter.

Three types of breadcrumbs are typically used in intermediates. These are standard baked breadcrumb having a range of particle sizes, rusk, and extruded crumb. Extruded crumb is sometimes added so that it shows through the batter. For example, extruded crumb having a half-moon appearance may be added so that the tempura batter on to will have a bumpy, rippled appearance when cooked.

Flour may also be used to bulk out intermediates, although too much flour can make the intermediate dense, impairing the texture of the final product.

Intermediates are protected from direct contact with the hot oil and/or fat during frying and are sometimes therefore used to carry flavours and other additives which would otherwise be damaged by the heat. As above, oil is sometimes added to intermediates to reduce dust. Flavours may also be applied to predusts, or may be used in adhesion batter layers. As the flavour is closer to the substrate, heat damage of the flavourings is suppressed.

As used herein, the term "conventional batter composition" refers to prior art batter compositions consisting substantially of flour, water and leavening agents.

A variety of combinations of predusts, intermediates, adhesion batters and tempura batters may be contemplated by the skilled person. For example, a coating procedure could be selected from one or more of the following:
1. Substrate, tempura, fry, chill/freeze
2. Substrate, predust, tempura, fry, chill/freeze
3. Substrate, predust, adhesion batter, intermediate, tempura, fry, chill/freeze
4. Substrate, adhesion batter, intermediate, tempura, fry, chill/freeze
5. Substrate, adhesion batter, adhesion batter, intermediate, tempura,
   fry, chill/freeze
6. Substrate, adhesion batter, intermediate, adhesion batter, intermediate, tempura, fry, chill/freeze
7. Substrate, predust, cook, adhesion batter, intermediate, tempura, fry, chill/freeze
8. Substrate, predust, cook, intermediate, tempura, fry, chill/freeze
9. Substrate, tempura, fry, cook, chill/freeze
10. Substrate, predust, tempura, fry, cook, chill/freeze
11. Substrate, predust, adhesion batter, intermediate, tempura, fry, cook, chill/freeze
12. Substrate, adhesion batter, intermediate, tempura, fry, cook, chill/freeze
13. Substrate, adhesion batter, adhesion batter, intermediate, tempura, fry, cook, chill/freeze.

Other combinations are possible as would immediately be appreciated by those of skill in the art. In particular, it is not excluded that an intermediate could form the outer coating layer, where the edible batter composition of the invention is used as an adhesion batter (for example, in the preparation of breadcrumb-coated food substrates).

Where the food substrate is provided with a number of coating layers, it is preferred that any coating layer that is immediately adjacent to the edible batter composition of the invention has a low alkali metal ion content. This avoids leaching of alkali metal ions into the edible batter compositions of the invention, which can cause increased uptake of fat and/or oil during frying. Typically, where the edible batter composition of the invention forms the outer coating layer (i.e. a tempura batter), the intermediate or predust layer below the outer coating layer is low in alkali metal ions.

It is also possible that, where a coating layer is not immediately adjacent to the edible batter composition of the invention, that coating layer may have an increased salt content to compensate for the low salt content of the edible batter composition and any layer that is adjacent to it. Preferably, there should be at least one coating layer that is low in alkali metal ions between a layer of the edible batter composition of the invention and a coating layer having increased salt content. More preferably, there should be at least two coating layers between a layer of the edible batter composition of the invention and a coating layer having increased salt.

Intermediates and predusts may be applied using a preduster or a breadcrumber. The food substrate is carried through the preduster or breadcrumber on a belt and is usually dropped onto the predust or intermediate to coat the bottom surface while predust is dropped onto the top surface. Excess predust or intermediate is shaken and/or blown off of the food substrate. Between 1 and 8 weight percent pick-up of predusts and between 4 and 12 weight percent pick-up of intermediates is typical.

Batter layers (including conventional batter layers and layers of the edible batter compositions of the present invention) may be applied to the food substrates using a batter enrober. One kind of batter enrober employs a trough of batter and a conveyor belt carrying the substrates into and through the batter. Typically the trough will be temperature controlled and batter will automatically be fed into the trough to replace the batter that is removed. Another kind of batter enrober, known as a curtain enrober, drops batter onto the food substrates from above. The batter may also be sprayed onto the food substrates. Such methods are well known by persons of skill in the art.

The present invention will now be discussed further by reference to the following examples.

### Examples

### Example 1 - Coating Procedures (Chicken Nuggets)

This example demonstrates one way in which batter-coated chicken nuggets are prepared industrially.
1. A chicken nugget substrate is formed using a forming machine. The chicken nugget substrate consists of chicken breast meat, water, salt, functional starch and phosphates.
2. The formed substrate is coated in a predust, which is applied between 2 and 15 weight percent pick-up, and typically 5 weight percent pick-up. The predust is applied by a predust coating machine which applies the predust and then blows off excess pick-up.
3. The nugget is cooked in a steam oven, 100% saturated steam and a temperature of 100°C is used to cook the substrate as a safety measure. At this point weight is gained as the predust absorbs moisture from the steam oven - this is known as a yield gain.
4. The hot moist nuggets are then coated in an intermediate which adds weight and makes the surface of the product dry. Between 2 and 15 weight percent pick-up, and typically 5 weight percent pick-up of the intermediate is applied.
5. Tempura batter is then applied to the nugget substrate. The temperature of the batter could range from 5°C to 25°C though usually is around 10°C. Between 20 and 40 weight percent pick-up is usual.
6. The nugget is then flash/par-fried in vegetable oil at 180 to 200 °C for between 20 and 60 seconds.
7. The nugget is then frozen and packed.
8. The nugget is subsequently fully cooked in a deep fat fryer or oven in a restaurant or in a domestic kitchen.

This process can be summarised as: substrate, predust, steam, intermediate, tempura, flash fry, freeze. However, one of the following coating procedures could also easily have been used:
Substrate, predust, tempura, fry, freeze.
Substrate, predust, adhesion batter, intermediate, tempura, fry, freeze.
Substrate, adhesion batter, intermediate, tempura, fry, freeze.
Substrate, adhesion batter, adhesion batter, intermediate, tempura, fry, freeze.

### Example 2 - Coating Procedures (Battered Fish)

This example demonstrates one way in which batter-coated fish are prepared industrially.
1. Frozen cod tails are used for the substrate.
2. The frozen cod tail is passed through a steam curtain to remove surface ice.
3. An adhesion batter is applied onto the cod tail, between 5% and 10% pick-up by weight.
4. An intermediate is applied to the cod tail, between 5% and 12% pick-up by weight.
5. A tempura batter is applied to the cod tail, between 20 and 40% pick-up by weight.
6. The product is flash fried for 35 to 60 seconds at 180 °C to 205 °C.
7. The product is then chilled or frozen and packaged.
8. The product is cooked in an oven, deep fried or grilled, in a restaurant or in a domestic kitchen.

This process can be summarised as: substrate, adhesion batter, intermediate, tempura, flash fry, freeze.

### Example 3 - Reduced Fat Chicken Nuggets

A 1 % by weight solution of a protein mixture of myofibrillar and sarcoplasmic proteins derived from chicken (available commercially under the trade name "Nutrilean", Proteus

Industries, Gloucester, MA, USA) was prepared by mixing the powdered protein with water in a food mixer.

A reduced fat tempura batter dry mix was prepared by combining wheat flour (40 to 45 wt%); maize flour (40 to 45 wt%); wheat starch (5 to 15 wt%); whey powder (1 to 4 wt%); neutralising amounts of sodium acid pyrophosphate (0.1 to 0.5 wt%) and sodium bicarbonate (0.1 to 0.4 wt%); and black pepper (0.2 to 1 wt%).

A standard tempura batter dry mix was prepared by combining wheat flour (40 to 45 wt%); maize flour (40 to 45 wt%); wheat starch (5 to 15 wt%); whey powder (1 to 4 wt%); neutralising amounts of sodium acid pyrophosphate (0.4 to 0.8 wt%) and sodium bicarbonate (0.2 to 0.6 wt%); salt (2 to 5 wt%); and black pepper (0.2 to 1 wt%).

The chicken protein solution was used to hydrate the reduced fat tempura batter dry mix at a ratio of 1.25 parts chicken protein solution to 1 part reduced fat tempura batter dry mix to form an edible batter composition according to the invention.

A comparative batter composition not containing protein was prepared by using water to hydrate the reduced fat tempura batter dry mix at a ratio of 1.25 parts water to 1 part reduced fat tempura batter dry mix.

A second comparative batter composition containing protein was prepared by using the chicken protein solution to hydrate the standard tempura batter dry mix at a ratio of 1.25 parts chicken protein solution to 1 part standard tempura batter dry mix.

A third comparative batter composition not containing protein was prepared by using water to hydrate the standard tempura batter dry mix at a ratio of 1.25 parts water to 1 part standard tempura batter dry mix.

The above batter compositions are summarised in Table 1.

**Table 1**

| | Standard Batter No Protein | Reduced Fat Batter No Protein | Standard Batter With Protein | Reduced Fat Batter With Protein* |
|---|---|---|---|---|
| Batter (wt%) | 44.4 | 44.4 | 44.4 | 44.4 |
| Water (wt%) | 55.6 | 55.6 | 55.0 | 55.0 |
| Chicken Protein (wt%) | 0 | 0 | 0.6 | 0.6 |
| Alkali metal (mol/kg) | 0.270 | 0.021 | 0.270 | 0.021 |

| | | | | |
|---|---|---|---|---|
| *Edible batter composition according to the invention | | | | |

All tempura batters had the same viscosities. Frozen 12 g chicken nugget cores were used as meat substrates to be coated.

Twenty four frozen 12 g chicken nugget cores were coated with a standard adhesion batter, 5% pick-up by weight. The nuggets were then dusted in wheat flour (intermediate), 5% pick-up by weight. The nuggets were separated in to two batches of twelve. One batch of twelve nuggets was coated with the standard tempura batter with no protein (held at 14°C) and flash fried for 23 seconds in rapeseed oil at 190°C for 23 seconds and frozen at -18°C. The other batch of 12 was coated with the standard tempura batter including protein (held at 14°C) and flash fried for 23 seconds in rapeseed oil at 190°C for 23 seconds and frozen at -18°C.

A further twenty four frozen 12 g nugget cores were coated with a standard adhesion batter, 5% pick-up by weight. The nuggets were then dusted in wheat flour (a low sodium intermediate), 5% pick-up by weight. The nuggets were separated into two batches of twelve. One batch of twelve was coated with the reduced fat tempura batter with no protein (held at 14°C) and flash fried for 23 seconds in rapeseed oil at 190°C for 23 seconds and frozen at -18°C. The other batch of twelve was coated with the reduced fat tempura batter including protein (edible batter composition according to the invention) held at 14°C, and flash fried for 23 seconds in rapeseed oil at 190°C for 23 seconds and frozen at -18°C.

Each batch of chicken nuggets was then reconstituted by frying in palm oil at 182°C for 3 minutes and 15 seconds. All products were cooked for the same length of time so comparisons between the comparative products and the low fat products are true. After cooking the fryer basket is shaken 20 times and each batch of nuggets was placed into a nylon plastic bag which was then sealed. Each batch of nuggets was cooled to room temperature in a refrigerator. Once at room temperature each batch of nuggets was homogenised in a Kenwood food processor and placed back in the nylon bag ready for fat testing.

### Example 4 - Fat Analysis

Each batch of chicken nuggets prepared according to Example 3 was analysed for its fat content. Fat analysis was conducted on a Smart Trac Rapid Fat Analyzer (CEM, Buckingham, UK). A calibration curve was set up with a 5 points, 3 samples per point, using samples with fat levels ranging from 1% fat to 25% fat, confirmed in triplicate by a UCAS accredited Lab, Beverley Analytical Laboratories, Beverley, UK.

Two Smart Trac Sample Pads are tared on a balance. Between 3 g and 3.5 g of homogenised sample is placed on one of the Smart Trac Sample Pads, the sample is smeared across the pad and a second pad is placed on top of the sample. Pressure is placed on the pads to stick the sample between the two pads. The sample is dried in the microwave/infrared moisture analyser set to 100% power with a maximum dry time of 10 minutes. The sample is then rolled up inside a square of Smart Trac Film and placed into a sample tube. The sample tube is then placed into the NMR analyser and the sample is run for 64 seconds. Measurements were made in duplicate for each batch of nuggets and an average fat content was obtained.

The results of the fat analysis for each batch of chicken nuggets are summarised in Table 2.

**Table 2**

| | Fat (wt%) | | Average Fat (wt%) | Direct Fat Reduction | Fat Reduction for Similar Texture |
|---|---|---|---|---|---|
| Standard Batter No Protein | 12.2 | 12.2 | 12.2 | N/A | N/A |
| Standard Batter With Protein | 11.5 | 11.2 | 11.4 | 6.97% | N/A |
| Reduced Fat Batter No Protein | 9.1 | 9.1 | 9.1 | N/A | N/A |
| Reduced Fat Batter With Protein* | 7.2 | 7.2 | 7.2 | 20.88% | 40.98% |

| | | | | | |
|---|---|---|---|---|---|
| *Edible batter composition according to the invention | | | | | |

As used herein, direct fat reduction refers to the fat reduction obtained in a particular batter composition when using the protein, compared to a corresponding batter composition that omits the protein. This clearly demonstrates the beneficial effect of a low concentration of alkali metal ions in reducing uptake of fat and/or oil when the protein is used.

Addition of the protein to the standard batter mix resulted in a significant change in texture. Addition of the protein to the reduced fat batter composition results in a lightening of the texture. The resulting texture is comparable to that of the standard batter containing no protein. The reduction in fat obtained without significant change in texture for this comparison is 40.98%.

### Example 5 - Taste Testing

Each batch of chicken nuggets prepared according to Example 3 was tested by an independent taste panel.

The colour, visual appeal (e.g. ripples, sheen), texture and flavour of the chicken nuggets were scored using a nine point hedonic scale:
0 = very poor
3 = marginally acceptable
6 = very acceptable
9 = outstanding

The results of these tests is summarised in Table 3

**Table 3**

| | Colour | Visuals | Texture | Flavour | Average |
|---|---|---|---|---|---|
| Standard Batter No Protein | 7 | 7 | 7 | 7 | 7 |
| Standard Batter With Protein | 4 | 4 | 3 | 5 | 4 |
| Reduced Fat Batter No Protein | 6 | 6 | 3 | 3 | 4.5 |
| Reduced Fat Batter With Protein* | 7 | 7 | 7 | 6 | 6.75 |

| | | | | | |
|---|---|---|---|---|---|
| *Edible batter composition according to the invention | | | | | |

### Example 6 - Reduced Fat Battered Fish

A 1 % by weight solution of a protein mixture of myofibrillar and sarcoplasmic proteins derived from Pollock (available commercially under the trade name "Nutrilean", Proteus Industries, Gloucester, MA, USA) was prepared by mixing the powdered protein with water in a food mixer.

A reduced fat tempura batter dry mix was prepared by combining wheat flour (65 to 75 wt%); maize flour (15 to 20 wt%); wheat starch (5 to 15 wt%); whey powder (1 to 4 wt%); and neutralising amounts of sodium acid pyrophosphate (0.1 to 0.5 wt%) and sodium bicarbonate (0.1 to 0.4 wt%).

A standard tempura batter dry mix was prepared by combining wheat flour (65 to 75 wt%); maize flour (15 to 20 wt%); wheat starch (5 to 15 wt%); whey powder (1 to 4 wt%); neutralising amounts of sodium acid pyrophosphate (0.5 to 0.9 wt%) and sodium bicarbonate (0.2 to 0.7 wt%); and salt (2 to 5 wt%).

The pollock protein solution was used to hydrate the reduced fat tempura batter dry mix at a ratio of 1.25 parts pollock protein solution to 1 part reduced fat tempura batter dry mix to form an edible batter composition according to the invention.

A comparative batter composition not containing protein was prepared by using water to hydrate the standard tempura batter dry mix at a ratio of 1.25 parts water to 1 part standard tempura batter dry mix.

Both tempura batters have the same viscosities.

The above batter compositions are summarised in Table 4.

**Table 4**

| | Standard Batter No Protein | Reduced Fat Batter With Protein* |
|---|---|---|
| Batter (wt%) | 44.4 | 44.4 |
| Water (wt%) | 55.6 | 55.0 |
| Pollock Protein (wt%) | 0 | 0.6 |
| Alkali metal (mol/kg) | 0.283 | 0.021 |

| | | |
|---|---|---|
| *Edible batter composition according to the invention | | |

Frozen cod tails were cut to 50g and to the same dimensions.

A batch of eight cod tails were coated in a standard adhesion batter, 6% pick-up by weight, and wheat flour (intermediate), 6% pick-up by weight, before applying the standard tempura batter held at 14°C, 24% pick-up by weight. These were then par-fried in rapeseed oil at 190°C for 23 seconds and frozen at -18°C.

A further batch of eight cod tails were coated in a standard adhesion batter, 6% pick-up by weight, and wheat flour (low sodium intermediate), 6% pick-up by weight, before applying the reduced fat tempura batter including protein (edible batter composition according to the invention) held at 14°C, 24% pick-up by weight. These were then par-fried in rapeseed oil at 190°C for 23 seconds and frozen at -18°C.

Four cod tails from each batch were reconstituted in palm oil at 182°C for 3 minutes and four cod tails from each batch were reconstituted in an oven (Newhome S3-E700S fan assisted electric oven) at 200°C for 15 minutes. Each batch of cod tails was cooled to room temperature in a refrigerator. Once at room temperature each batch of cod tails was homogenised in a Kenwood food processor and placed back in the nylon bag ready for fat testing.

### Example 7 - Fat Analysis

Each batch of cod tails prepared according to Example 6 was analysed for its fat content using a Smart Trac Rapid Fat Analyzer (CEM, Buckingham, UK) according to the procedure outlined in Example 4.

The results of the fat analysis for each batch of cod tails are summarised in Table 5.

**Table 5**

| | Reconstitution | Fat Content (wt%) | | Average (wt%) | Reduction¹ |
|---|---|---|---|---|---|
| Standard Batter No Protein | Fryer | 10.6 | 10.4 | 10.5 | N/A |
| | Oven | 5.1 | 5.5 | 5.3 | N/A |
| Reduced Fat Batter With Protein* | Fryer | 6.0 | 6.2 | 6.1 | 41.7% |
| | Oven | 3.4 | 3.6 | 3.5 | 33.6% |

| | | | | | |
|---|---|---|---|---|---|
| *Edible batter composition according to the invention ¹Fat reduction when compared to standard batter reconstituted in the same way | | | | | |

The texture and appearance of the standard batter product and the reduced fat batter product according to the invention were comparable.

### Example 8 - Taste Testing

Each batch of battered cod tails prepared according to Example 6 was tested by an independent taste panel as in Example 5.

The results of these tests are summarised in Table 6.

**Table 6**

| | | Colour | Visuals | Texture | Flavour | Average |
|---|---|---|---|---|---|---|
| Standard Batter No Protein | Fryer | 7 | 6 | 7 | 7 | 6.75 |
| | Oven | 6 | 6 | 5 | 7 | 5 |
| Reduced Fat Batter With Protein* | Fryer | 7 | 6 | 6 | 5 | 6 |
| | Oven | 6 | 6 | 5 | 5 | 5.5 |

| | | | | | | |
|---|---|---|---|---|---|---|
| *Edible batter composition according to the invention | | | | | | |

The results show that there are only minor differences observed by consumers between reduced fat products and standard products. Significant fat reductions were seen for both oven bake and deep fry products.

### Example 9 - pH Effects

### Reduced fat tempura batter composition pH 5.7

A 1 % by weight solution of a protein mixture of myofibrillar and sarcoplasmic proteins derived from chicken (available commercially under the trade name "Nutrilean", Proteus Industries, Gloucester, MA, USA) was prepared by mixing the powdered protein with water in a food mixer. The chicken protein solution was then used to hydrate the reduced fat tempura batter dry mix described in Example 3 at a ratio of 1.25 parts chicken protein solution to 1 part the reduced fat tempura batter dry mix to obtain an edible batter composition according to the invention. The pH was measured to be pH 5.7.

### Reduced fat tempura batter composition pH 3.3

The edible batter composition having pH 5.7 was prepared according to the method described above, and the pH was adjusted to pH 3.3 using concentrated phosphoric acid to obtain a further edible batter composition according to the invention.

### Standard tempura batter composition pH 5.9

A comparative batter composition not containing protein was prepared by using water to hydrate the standard tempura batter dry mix described in Example 3 at a ratio of 1.25 parts water to 1 part standard tempura batter dry mix. The pH was measured to be pH 5.9.

The above batter compositions are summarised in Table 7.

**Table 7**

| | Standard Batter pH 5.9 | Reduced Fat Batter pH 5.7* | Reduced Fat Batter pH 3.3* |
|---|---|---|---|
| Batter (wt%) | 44.4 | 44.4 | 44.4 |
| Water (wt%) | 55.6 | 55.0 | 55.0 |
| Chicken Protein (wt%) | 0 | 0.6 | 0.6 |
| Alkali metal (mol/kg) | 0.27 | 0.021 | 0.021 |

| | | | |
|---|---|---|---|
| *Edible batter composition according to the invention | | | |

All the batters had the same viscosity.

Twelve frozen 12 g chicken nugget cores were coated with a standard adhesion batter, 5% pick-up by weight. The nuggets were then dusted in wheat flour (intermediate), 5% pick-up by weight, and then coated with the standard tempura batter at pH 5.9 with no protein (held at 14°C) and flash fried for 23 seconds in rapeseed oil at 190°C for 23 seconds and frozen at -18°C.

Twenty four frozen 12 g nugget cores were coated with a standard adhesion batter, 5% pick-up by weight. The nuggets were then dusted in wheat flour (low sodium intermediate), 5% pick-up by weight. The nuggets were separated in to two batches of twelve. One batch of twelve was coated with the reduced fat tempura batter at pH 3.3 (edible batter composition according to the invention) held at 14°C and flash fried for 23 seconds in rapeseed oil at 190°C for 23 seconds and frozen at -18°C. The other batch of twelve was coated with the reduced fat tempura batter at pH 5.7 (edible batter composition according to the invention) held at 14°C, and flash fried for 23 seconds in rapeseed oil at 190°C for 23 seconds and frozen at -18°C.

Each batch of chicken nuggets was then reconstituted by frying in palm oil at 182°C for 3 minutes and 15 seconds. All products were cooked for the same length of time so comparisons between the comparative products and the low fat products are true. After cooking the fryer basket was shaken 20 times and each batch of nuggets was placed into a nylon plastic bag which was then sealed. Each batch of nuggets was cooled to room temperature in a refrigerator. Once at room temperature each batch of nuggets was homogenised in a Kenwood food processor and placed back in the nylon bag ready for fat testing.

### Example 10 - Fat Analysis

Each batch of chicken nuggets prepared according to Example 9 was analysed for its fat content using a Smart Trac Rapid Fat Analyzer (CEM, Buckingham, UK) according to the procedure outlined in Example 4.

The results of the fat analysis for each batch of chicken nuggets are summarised in Table 8.

**Table 8**

| | Fat | | Average Fat | Fat Reduction¹ |
|---|---|---|---|---|
| Standard Batter pH 5.9 | 13.37 | 12.92 | 13.15 | N/A |
| Reduced Fat Batter pH 5.7* | 9.65 | 9.81 | 9.73 | 25.98% |
| Reduced Fat Batter pH 3.3* | 9.57 | 9.82 | 9.70 | 26.25% |

| | | | | |
|---|---|---|---|---|
| * Batter composition according to the invention ¹ Relative to the standard batter of pH 5.9 | | | | |

These results show that the lowering of the pH has no affect on the fat reduction. Taste panels have shown that when an acid is used to reduce the pH there is a flavour imparted which is detrimental to the product.

### Example 11 - Comparison with Standard Commercially-Available Batter Compositions

This Example demonstrates that when the proteins described above are used in combination with standard commercially-available batter mixes, the resulting batter compositions are not as effective as reducing fat uptake as the compositions of the invention. Contrary to the disclosure in US 7,163,707, it has been found that fat reduction and acceptable product quality is not obtained merely by addition of the protein to any batter composition.

Six numbered batter compositions were prepared as follows:
1. A reduced fat tempura batter composition according to the invention was prepared according to the method described in Example 6, using a 1% by weight solution of a protein mixture of myofibrillar and sarcoplasmic proteins derived from Pollock (available commercially under the trade name "Nutrilean", Proteus Industries, Gloucester, MA, USA).
2. A comparative tempura batter composition not containing protein was prepared by using water to hydrate the reduced fat tempura batter dry mix described in Example 3 at a ratio of 1.25 parts water to 1 part reduced fat tempura batter dry mix.
3. A Kerry Food Service Henry Jones Gold Batter tempura batter mix (wheat flour, salt, E450, E500, colourings, E170 and xanthan gum; Kerry Food Service Bristol UK) was hydrated with the Pollock protein solution described above at a ratio of 1.25 parts Pollock protein solution to 1 part Kerry Henry Jones Gold Batter tempura batter mix.
4. The Kerry Food Service batter mix described above was also hydrated using water, at a ratio of 1.25 parts water to 1 part Kerry Henry Jones Gold Batter tempura batter mix.
5. A Tazaki Foods tempura batter mix (wheat flour, E500, sesame powder, mustard, iron, thiamin (B1), riboflavin (B2) and folic acid; Tazaki Foods, Enfield, UK) was hydrated with the Pollock protein solution described above at a ratio of 1.25 parts Pollock protein solution to 1 part Tazaki Foods tempura batter mix.
6. The Tazaki Foods tempura batter mix described above was also hydrated using water, at a ratio of 1.25 parts water to 1 part Tazaki Foods tempura batter mix.

The compositions of the above batter compositions are summarised in Table 9.

**Table 9**

| Batter type (1-6) | 1* | 2 | 3 | 4 | 5 | 6 |
|---|---|---|---|---|---|---|
| Batter (wt%) | 43.9 | 44.4 | 43.9 | 44.4 | 43.9 | 44.4 |
| Water (wt%) | 55.55 | 55.6 | 55.55 | 55.6 | 55.55 | 55.6 |
| Pollock Protein (wt%) | 0.55 | 0 | 0.55 | 0 | 0.55 | 0 |
| Alkali metal (mol/kg) | 0.021 | 0.27 | 0.287 | 0.287 | 0.056 | 0.056 |

| | | | | | | |
|---|---|---|---|---|---|---|
| *Edible batter composition according to the invention | | | | | | |

Frozen cod tails were cut to 50g and to the same dimensions.

For each of the batter compositions 2, 4 and 6, eight frozen cod tails were coated in a standard adhesion batter, 6% pick-up by weight, and wheat flour (intermediate), 6% pick-up by weight, before applying the standard tempura batter held at 14°C, 24% pick-up by weight. These were then par-fried in rapeseed oil at 190°C for 23 seconds and frozen at -18°C.

For each of the batter compositions 1, 3 and 5, eight frozen cod tails were coated in a standard adhesion batter, 6% pick-up by weight, and wheat flour (low sodium dry intermediate), 6% pick-up by weight, before applying the protein tempura batter held at 14°C, 24% pick-up by weight. These were then par-fried in rapeseed oil at 190°C for 23 seconds and frozen at -18°C.

Products for each batter were reconstituted in palm oil at 182°C for 3 minutes.

### Example 12 - Fat analysis

Each batch of cod tails prepared according to Example 11 was analysed for its fat content using a Smart Trac Rapid Fat Analyzer (CEM, Buckingham, UK) according to the procedure outlined in Example 4.

The results of the fat analysis for each batch of chicken nuggets are summarised in Table 10.

**Table 10**

| | Type (1-6) | Fat Content | | Average | Reduction¹ |
|---|---|---|---|---|---|
| Reduced Fat Tempura Batter | Protein (1)* | 6.71 | 6.69 | 6.70 | 30.45% |
| | No Protein (2) | 4.70 | 4.62 | 4.66 | |
| Kerry Foods | Protein (3) | 7.36 | 7.47 | 7.42 | -31.29%² |
| | No Protein (4) | 9.81 | 9.66 | 9.74 | |
| Tazaki Foods Tempura Batter | Protein (5) | 6.58 | 6.62 | 6.60 | -20.00% |
| | No Protein (6) | 7.85 | 7.99 | 7.92 | |

| | | | | | |
|---|---|---|---|---|---|
| *Edible batter composition according to the invention ¹ Percentage fat reduction obtained by protein containing batters compared to non-protein-containing batters of the same type. ^{2.} Negative fat reduction indicates an increase in fat uptake. | | | | | |

### Example 13 - Taste Testing

Each batch of cod tails prepared according to Example 10 was tested by an independent taste panel as in Example 5.

The results of these tests are summarised in Table 11.

**Table 11**

| | Type (1-6) | Colour | Visuals | Texture | Flavour | Average |
|---|---|---|---|---|---|---|
| Reduced Fat Tempura Batter | Protein (1)* | 8 | 7 | 6 | 6 | 6.75 |
| | No Protein (2) | 8 | 7 | 7 | 6 | 7 |
| Kerry Foods | Protein (3) | 3 | 4 | 1 | 4 | 3 |
| | No Protein (4) | 8 | 5 | 7 | 6 | 6.5 |
| Tazaki Foods Tempura Batter | Protein (5) | 2 | 1 | 1 | 3 | 1.75 |
| | No Protein (6) | 6 | 5 | 6 | 6 | 5.75 |

| | | | | | | |
|---|---|---|---|---|---|---|
| *Edible batter composition according to the invention | | | | | | |

Both the Kerry and Tazaki protein-containing products were found to be much tougher, chewier, much oilier, containing raw flavour notes and there was a significant colour loss compared to the non-protein-containing batters.

These results show the need for a specifically designed batter for use with the protein. Simply adding the protein to a standard batter resulted in a significant loss of texture and an increase in fat pick-up.

### Example 14 - Methods of Mixing

This Example demonstrates the effect that correct mixing can have in increasing the fat reduction observed when using the edible batter compositions of the invention.

### Reduced Fat Tempura Batter Mix 1

To the reduced fat tempura batter dry mix described in Example 3 was added 1.2 wt% of dry chicken protein as described in Example 3 (Proteus Industries, Gloucester, MA, USA). The mixture was hydrated with water at 1.25 parts water to 1 part reduced fat tempura batter dry mix.

### Reduced Fat Tempura Batter Mix 2

The reduced fat tempura batter dry mix described in Example 3 was thoroughly mixed with oil to evenly spread the oil over all ingredients. 1.2 weight percent of the dry chicken protein as described in Example 3 (Proteus Industries, Gloucester, MA, USA) was added and the batter mix and protein were given a very gentle mix. The resulting mixture was hydrated with water at 1.25 parts water to 1 part reduced fat tempura batter dry mix.

### Reduced Fat Tempura Batter Mix 3

The reduced fat tempura batter dry mix described in Example 3 was hydrated using the chicken protein solution also described in Example 3, at a ratio of 1.25 parts chicken protein solution to 1 part reduced fat tempura batter dry mix.

### Standard Tempura Batter Mix

A comparative batter composition not containing protein was prepared by using water to hydrate the standard tempura batter dry mix described in Example 3 at a ratio of 1.25 parts water to 1 part standard tempura batter dry mix.

The above batter compositions are summarised in Table 12.

**Table 12**

| | Standard Batter | Reduced Fat Batters 1*, 2*, 3* |
|---|---|---|
| Batter (wt%) | 44.4 | 43.87 |
| Water (wt%) | 55.6 | 55.6 |
| Pollock Protein (wt%) | 0 | 0.53 |
| Alkali metal (mol/kg) | 0.27 | 0.021 |

| | | |
|---|---|---|
| *Edible batter composition according to the invention | | |

All tempura batters had the same viscosities.

Twelve frozen 12 g chicken nugget cores were coated with a precook predust 6% pick-up by weight, and cooked for 5 minutes in a Hobart Convection Steamer CSD-06126 Oven, London UK, on full steam 100°C. Wheat flour (intermediate), 6% pick-up by weight was applied before applying the standard tempura batter mix described above, held at 14°C, 24% pick-up by weight. The nuggets were then flash fried in rapeseed oil at 195°C for 23 seconds and frozen at -18°C.

Twelve frozen 12 g chicken nugget cores were coated with a precook predust 6% pick-up by weight, and cooked for 5 minutes in a Hobart Convection Steamer CSD-06126 Oven, London UK, on full steam 100°C. Wheat flour (low sodium intermediate), 6% pick-up by weight was applied before applying the reduced fat tempura batter mix 1 described above (edible batter composition according to the invention), held at 14°C, 24% pick-up by weight. The nuggets were then flash fried in rapeseed oil at 195°C for 23 seconds and frozen at -18°C.

Twelve frozen 12 g chicken nugget cores were coated with a precook predust 6% pick-up by weight, and cooked for 5 minutes in a Hobart Convection Steamer CSD-06126 Oven, London UK, on full steam 100°C. Wheat flour (low sodium intermediate), 6% pick-up by weight was applied before applying the reduced fat tempura batter mix 2 described above (edible batter composition according to the invention), held at 14°C, 24% pick-up by weight. The nuggets were then flash fried in rapeseed oil at 195°C for 23 seconds and frozen at -18°C.

Twelve frozen 12 g chicken nugget cores were coated with a precook predust 6% pick-up by weight, and cooked for 5 minutes in a Hobart Convection Steamer CSD-06126 Oven, London UK, on full steam 100°C. Wheat flour (low sodium intermediate), 6% pick-up by weight was applied before applying the reduced fat tempura batter mix 3 described above (edible batter composition according to the invention), held at 14°C, 24% pick-up by weight. The nuggets were then flash fried in rapeseed oil at 195°C for 23 seconds and frozen at -18°C.

Each batch of chicken nuggets was then reconstituted by frying in palm oil at 182°C for 3 minutes and 15 seconds.

Half of the nuggets were analysed for fat content, the other half were tested by a taste panel.

### Example 15 - Fat analysis

Each batch of chicken nuggets prepared according to Example 14 was analysed for its fat content using a Smart Trac Rapid Fat Analyzer (CEM, Buckingham, UK) according to the procedure outlined in Example 4.

The results of the fat analysis for each batch of chicken nuggets are summarised in Table 13.

**Table 13**

| | Fat Content (wt%) | | Average (wt%) | Reduction¹ |
|---|---|---|---|---|
| Standard Tempura Batter | 14.86 | 14.12 | 14.49 | N/A |
| Reduced Fat Tempura Batter 1* | 12.63 | 12.25 | 12.44 | 13.01 |
| Reduced Fat Tempura Batter 2* | 10.56 | 10.03 | 10.30 | 28.01 |
| Reduced Fat Tempura Batter 3* | 11.22 | 10.84 | 11.03 | 22.87 |

| | | | | |
|---|---|---|---|---|
| * Batter composition according to the invention ¹ Percentage fat reduction obtained by protein containing batters compared to standard tempura batter | | | | |

This Example clearly demonstrates that optimum fat reduction is obtained when the batter composition is prepared by a method which ensures full hydration of the protein and/or peptide mixture.

### Example 16 - Taste Testing

Each batch of chicken nuggets prepared according to Example 14 was tested by an independent taste panel as in Example 5.

The results of these tests are summarised in Table 14.

**Table 14**

| | Colour | Visuals | Texture | Flavour | Average |
|---|---|---|---|---|---|
| Standard Tempura Batter | 7 | 7 | 7 | 6 | 6.75 |
| Reduced Fat Tempura Batter 1* | 6 | 5 | 4 | 5 | 5 |
| Reduced Fat Tempura Batter 2* | 6 | 6 | 6 | 5 | 5.75 |
| Reduced Fat Tempura Batter 3* | 6 | 6 | 6 | 5 | 5.75 |

| | | | | | |
|---|---|---|---|---|---|
| * Batter composition according to the invention | | | | | |

The results show that there are only minor differences observed by consumers between reduced fat products and standard products, even where the specified mixing techniques provide as much as 30% fat reduction.

## Claims

1. An edible batter composition for frying in fat and/or oil, said edible batter composition comprising:
(a) 27 to 57 weight percent flour;
(b) 40 to 70 weight percent water; and
(c) 0.15 to 3.0 weight percent of a protein and/or peptide mixture derived from animal muscular tissue obtained from fish, poultry or meat;
wherein the edible batter composition comprises up to 6 weight percent of an edible fat and/or oil relative to the edible batter composition; and
wherein the edible batter composition comprises less than or equal to 0.030 mol/kg of alkali metal ions.

2. An edible batter composition according to Claim 1, wherein the protein and/or peptide mixture is selected from:
(i) a protein mixture of myofibrillar and sarcoplasmic proteins derived from animal tissue; and/or
(ii) a peptide mixture prepared by enzymatic degradation of a protein mixture of myofibrillar and sarcoplasmic proteins derived from animal tissue.

3. An edible batter composition according to any one of the preceding claims, comprising from 0.25 to 2.0 weight percent of the protein and/or peptide mixture, preferably from 0.5 to 1.0 weight percent of the protein and/or peptide mixture.

4. An edible batter composition according to any one of the preceding claims, wherein the edible batter composition comprises less than or equal to 0.025 mol/kg of alkali metal ions, preferably less than or equal to 0.020 mol/kg of alkali metal ions.

5. An edible batter composition according to any one of the preceding claims, further comprising a chemical or biological leavening system, such as one wherein the chemical leavening system comprises at least one alkaline leavening agent and at least one acidic leavening agent which react together to form carbon dioxide gas, preferably wherein the chemical leavening system comprises one or more alkaline leavening agents selected from: sodium bicarbonate, sodium carbonate, ammonium bicarbonate, ammonium carbonate, potassium bicarbonate, potassium carbonate, and potassium bitartrate, and preferably wherein the chemical leavening system comprises one or more acidic leavening agents selected from: monocalcium phosphate, dicalcium phosphate, monosodium phosphate, sodium aluminium phosphate, and sodium acid pyrophosphate.

6. An edible batter composition according to Claim 5, wherein the chemical leavening system provides greater than 90 mole percent of the alkali metal ions in the edible batter composition.

7. An edible batter composition according to any one of the preceding claims, wherein the flour comprises from 0 to 100 weight percent wheat flour, from 0 to 100 weight percent maize flour and from 0 to 30 weight percent rice flour.

8. An edible batter composition according to any one of the preceding claims, comprising one or more of:
(i) from 1.5 to 18 weight percent of native or modified starch, preferably wherein the starch is selected from native wheat starch, modified wheat starch, native maize starch, modified maize starch, native rice starch, modified rice starch, native pea starch, modified pea starch, native tapioca starch, modified tapioca starch, native potato starch, and modified potato starch;
(ii) up to 10 weight percent relative to the edible batter composition of one or more colouring agents selected from: milk powder, skim milk powder, whey powder, dextrose, lactose, turmeric extract and paprika extract; or
(iii) edible oil comprising at least one of sunflower oil, rapeseed oil, maize oil, groundnut oil, sesame oil, soybean oil or palm oil.

9. An edible batter composition according to any one of the preceding claims, having a pH in the range of from 5.0 to 9.0.

10. An edible batter composition according to any one of the preceding claims, the composition not comprising acidifying or basifying agent other than as part of the chemical leavening system.

11. A precursor composition for preparing an edible batter composition as defined in any of Claims 1 to 10, the precursor composition comprising:
(a) 45 to 95 weight percent flour; and
(b) 0.25 to 5.0 weight percent of a dry protein and/or peptide mixture as defined in any one of Claims 1 to 3,
wherein the precursor composition comprises up to 10 weight percent of an edible fat and/or oil relative to the precursor composition; and
wherein the precursor composition comprises less than or equal to 0.050 mol/kg of alkali metal ions.

12. A precursor composition according to Claim 11, comprising from 0.40 to 3.4 weight percent of the protein and/or peptide mixture, preferably comprising from 0.8 to 1.7 weight percent of the protein and/or peptide mixture.

13. A precursor composition according to Claim 11 or Claim 12, wherein the precursor composition comprises less than or equal to 0.042 mol/kg of alkali metal ions, preferably less than or equal to 0.033 mol/kg of alkali metal ions.

14. A precursor composition according to any one of Claims 11 to 13, further comprising a chemical or biological leavening system, such as defined in Claim 5.

15. A precursor composition according to Claim 14, wherein the chemical leavening system provides greater than 90 mole percent of the alkali metal ions in the precursor composition.

16. A precursor composition according to any one of Claims 11 to 15, wherein the flour comprises from 0 to 100 weight percent wheat flour, from 0 to 100 weight percent maize flour and from 0 to 30 weight percent rice flour.

17. A precursor composition according to any one of Claims 11 to 16, comprising one or more of:
(i) from 2.5 to 30 weight percent of native or modified starch, preferably wherein the starch is selected from native wheat starch, modified wheat starch, native maize starch, modified maize starch, native rice starch, modified rice starch, native pea starch, modified pea starch, native tapioca starch and modified tapioca starch.
(ii) up to 15 weight percent relative to the precursor composition of one or more colouring agents selected from: milk powder, skim milk powder, whey powder, dextrose, lactose, turmeric extract and paprika extract.

18. A precursor composition according to any one of Claims 11 to 17, wherein the edible oil comprises at least one of sunflower oil, rapeseed oil, maize oil, groundnut oil, sesame oil, soybean oil or palm oil.

19. A method of preparing a precursor composition according to Claim 11 to 18, by:
(i) mixing all of the components of the precursor composition except for the protein and/or peptide mixture in a mixing apparatus so as to form a blended composition coated in the edible fat and/or oil;
(ii) mixing the dry protein and/or peptide mixture with the blended composition from step (i) such that the dry protein and/or peptide mixture remains substantially uncoated by the edible fat and/or oil.

20. A method according to Claim 19, which provides an edible batter composition having a pH in the range of from 5.0 to 9.0 when 60 to 30 parts by weight of the precursor composition are blended with 40 to 70 parts by weight of water, to obtain a total of 100 parts by weight.

21. A method of preparing an edible batter composition as defined in any one of Claims 1 to 10, comprising the step of adding 40 to 70 parts by weight of water to 60 to 30 parts by weight of a precursor composition as defined in any one of Claims 11 to 18, to obtain a total of 100 parts by weight.

22. A method of preparing an edible batter composition as defined in any one of Claims 1 to 10, the method comprising the steps of:
(i) dissolving the protein and/or peptide mixture in water to form a protein and/or peptide solution; and
(ii) combining the protein and/or peptide solution from step (i) with remaining components of the edible batter composition to form a slurry.

23. A method of preparing a food product comprising providing a food substrate with a coating layer of an edible batter composition as defined in any of Claims 1 to 10, and frying the batter-coated food substrate in oil and/or fat to provide a cooked or part-cooked batter-coated food substrate.

24. A method according to Claim 23, wherein the food substrate is selected from fish, poultry, meat, vegetable or fruit, and preferably is selected from finfish, chicken, turkey, duck, pork, beef, or venison.

25. A method according to Claim 24, wherein the food substrate is selected from poultry, and wherein the protein and/or peptide mixture is derived from poultry; or wherein the food substrate is selected from fish, and wherein the protein and/or peptide mixture is derived from fish; or wherein the food substrate is selected from meat, and wherein the protein and/or peptide mixture is derived from meat.

26. A method according to any one of Claims 23 to 25, wherein the cooked or part-cooked batter-coated food substrate is subsequently chilled or frozen.

27. A method according to Claim 26, wherein the frozen batter-coated food substrate is sprayed with a flavour-enhancing quantity of salt water, wherein the salt water freezes on contact with the frozen batter-coated food substrate.

28. A method according to any one of Claims 23 to 27, wherein the part-cooked batter-coated food substrate is subsequently fully cooked by frying in oil and/or fat and/or by oven baking.

29. A method according to any one of Claims 23 to 28, wherein the food substrate is provided with a plurality of coating layers and wherein at least the outer coating layer is of an edible batter composition as defined in any one of Claims 1 to 10.

30. A method according to any one of Claims 23 to 29, wherein the food substrate is provided with a plurality of coating layers and wherein the food substrate is additionally provided with at least one layer of an intermediate selected from breadcrumb and/or rusk and/or flour.

31. A food product comprising a food substrate having a coating layer of an edible batter composition as defined in any one of Claims 1 to 10.

32. A food product according to Claim 31, wherein the food substrate having a coating layer of an edible batter composition as defined in any one of Claims 1 to 10 has been cooked or part-cooked by frying in fat and/or oil; and, when the food product has been part-cooked by frying in fat and/or oil, the food product is preferably subsequently fully cooked by oven baking.

33. A food product according to Claim 31 or Claim 32, wherein the food substrate is selected from fish, poultry, meat, vegetable or fruit preferably selected from finfish, chicken, turkey, duck, pork, beef, or venison.

34. A food product according to Claim 33, wherein the food substrate is selected from poultry, and wherein the protein and/or peptide mixture is derived from poultry; or wherein the food substrate is selected from fish, and wherein the protein and/or peptide mixture is derived from fish; or wherein the food substrate is selected from meat, and wherein the protein and/or peptide mixture is derived from meat.

35. A food product according to any one of Claims 31 to 34, which is chilled or frozen.

36. A food product according to Claim 35, which is frozen and which is provided with a flavour-enhancing coating of salt water before or after being frozen.

37. A food product according to any one of Claims 31 to 36, wherein the food substrate is provided with a plurality of coating layers, and wherein at least the outer coating layer comprises an edible batter composition as defined in any one of Claims 1 to 10.

38. A food product according to any one of Claims 31 to 37, wherein the food substrate is provided with a plurality of coating layers, and wherein the food substrate is additionally provided with at least one layer of an intermediate selected from breadcrumb and/or rusk and/or flour and/or cracker meal.

## Patentansprüche

1. Essbare Teigzusammensetzung zum Frittieren in Fett und/oder Öl, wobei die genannte essbare Teigzusammensetzung Folgendes umfasst:
(a) 27 bis 57 Gewichtsprozent Mehl;
(b) 40 bis 70 Gewichtsprozent Wasser; und
(c) 0,15 bis 3,0 Gewichtsprozent eines Protein- und/oder Peptidgemischs, die von tierischem Muskelgewebe abgeleitet wird, das aus Fisch, Geflügel oder Fleisch erhalten wird;
wobei die essbare Teigzusammensetzung bis zu 6 Gewichtsprozent eines essbaren Fetts und/oder Öls bezogen auf die essbare Teigzusammensetzung umfasst; und
wobei die essbare Teigzusammensetzung kleiner gleich 0,030 mol/kg Alkalimetallionen umfasst.

2. Essbare Teigzusammensetzung nach Anspruch 1, wobei das Protein- und/oder Peptidgemisch aus Folgendem ausgewählt wird:
(i) einem Proteingemisch aus myofibrillaren und sarkoplasmatischen Proteinen, die aus tierischem Gewebe abgeleitet werden; und/oder
(ii) einem Peptidgemisch, das durch enzymatischen Abbau eines Proteingemischs von myofibrillaren und sarkoplasmatischen Proteinen hergestellt wird, die aus tierischem Gewebe abgeleitet werden.

3. Essbare Teigzusammensetzung nach einem der vorhergehenden Ansprüche, die 0,25 bis 2,0 Gewichtsprozent des Protein- und/oder Peptidgemischs, vorzugsweise 0,5 bis 1,0 Gewichtsprozent des Protein- und/oder Peptidgemischs umfasst.

4. Essbare Teigzusammensetzung nach einem der vorhergehenden Ansprüche, wobei die essbare Teigzusammensetzung kleiner gleich 0,025 mol/kg Alkalimetallionen, vorzugsweise kleiner gleich 0,020 mol/kg Alkalimetallionen umfasst.

5. Essbare Teigzusammensetzung nach einem der vorhergehenden Ansprüche, die ferner ein chemisches oder biologisches Triebmittelsystem umfasst, wie beispielsweise eines, bei dem das chemische Triebmittelsystem mindestens ein alkalisches Triebmittel und mindestens ein saures Triebmittel umfasst, die zusammen reagieren, um Kohlendioxidgas zu bilden, vorzugsweise wobei das chemische Triebmittelsystem ein oder mehrere alkalische Triebmittel umfasst, die aus Folgendem ausgewählt sind:
Natriumbicarbonat, Natriumcarbonat, Ammoniumbicarbonat, Ammoniumcarbonat, Kaliumbicarbonat, Kaliumcarbonat und
Kaliumbitartrat und vorzugsweise wobei das chemische Triebmittelsystem ein oder mehrere saure Triebmittel umfasst, die aus Folgendem ausgewählt sind:
Monocalciumphosphat, Dicalciumphosphat,
Mononatriumphosphat, Natriumaluminiumphosphat und saures Natriumpyrophosphat.

6. Essbare Teigzusammensetzung nach Anspruch 5, wobei das chemische Triebmittelsystem mehr als 90 Molprozent der Alkalimetallionen in der essbaren Teigzusammensetzung bereitstellt.

7. Essbare Teigzusammensetzung nach einem der vorhergehenden Ansprüche, wobei das Mehl Folgendes umfasst:
0 bis 100 Gewichtsprozent Weizenmehl, 0 bis 100 Gewichtsprozent Maismehl und 0 bis 30 Gewichtsprozent Reismehl.

8. Essbare Teigzusammensetzung nach einem der vorhergehenden Ansprüche, die eines oder mehrere von Folgendem umfasst:
(i) 1,5 bis 18 Gewichtsprozent native oder modifizierte Stärke, vorzugsweise wobei die Stärke aus Folgendem ausgewählt wird: native Weizenstärke, modifizierte Weizenstärke, native Maisstärke, modifizierte Maisstärke, native Reisstärke, modifizierte Reisstärke, native Erbsenstärke, modifizierte Erbsenstärke, natürliche Tapiokastärke, modifizierte Tapiokastärke, native Kartoffelstärke und modifizierte Kartoffelstärke;
(ii) bis zu 10 Gewichtsprozent bezogen auf die essbare Teigzusammensetzung eines oder mehrerer Farbmittel, die aus Folgendem ausgewählt sind: Milchpulver, Magermilchpulver, Molkepulver, Dextrose, Laktose, Kurkumaextrakt und Paprikaextrakt; oder
(iii) Speiseöl, das mindestens eines von Folgendem umfasst: Sonnenblumenöl, Rapsöl, Maisöl, Erdnussöl, Sesamöl, Sojaöl oder Palmöl.

9. Essbare Teigzusammensetzung nach einem der vorhergehenden Ansprüche, die einen pH-Wert im Bereich von 5,0 bis 9,0 aufweist.

10. Essbare Teigzusammensetzung nach einem der vorhergehenden Ansprüche, wobei die Zusammensetzung kein säuerndes oder alkalisierendes Mittel außer als Bestandteil des chemischen Triebmittelsystems umfasst.

11. Vorläuferzusammensetzung zur Herstellung einer essbaren Teigzusammensetzung nach einem der Ansprüche 1 bis 10, wobei die Vorläuferzusammensetzung Folgendes umfasst:
(a) 45 bis 95 Gewichtsprozent Mehl und
(b) 0,25 bis 5,0 Gewichtsprozent eines trockenen Protein- und/oder Peptidgemischs nach einem der Ansprüche 1 bis 3,
wobei die Vorläuferzusammensetzung bis zu 10 Gewichtsprozent eines essbaren Fetts und/oder Öls bezogen auf die Vorläuferzusammensetzung umfasst; und
wobei die Vorläuferzusammensetzung kleiner gleich 0,050 mol/kg Alkalimetallionen umfasst.

12. Vorläuferzusammensetzung nach Anspruch 11, die 0,40 bis 3,4 Gewichtsprozent des Protein- und/oder Peptidgemischs und vorzugsweise 0,8 bis 1,7 Gewichtsprozent des Protein- und/oder Peptidgemischs umfasst.

13. Vorläuferzusammensetzung nach Anspruch 11 oder Anspruch 12, wobei die Vorläuferzusammensetzung Folgendes umfasst: kleiner gleich 0,042 mol/kg Alkalimetallionen, vorzugsweise kleiner gleich 0,033 mol/kg Alkalimetallionen.

14. Vorläuferzusammensetzung nach einem der Ansprüche 11 bis 13, die ferner ein chemisches oder biologisches Triebmittelsystem nach Anspruch 5 umfasst.

15. Vorläuferzusammensetzung nach Anspruch 14, wobei das chemische Triebmittelsystem mehr als 90 Molprozent der Alkalimetallionen in der Vorläuferzusammensetzung bereitstellt.

16. Vorläuferzusammensetzung nach einem der Ansprüche 11 bis 15, wobei das Mehl Folgendes umfasst: 0 bis 100 Gewichtsprozent Weizenmehl, 0 bis 100 Gewichtsprozent Maismehl und 0 bis 30 Gewichtsprozent Reismehl.

17. Vorläuferzusammensetzung nach einem der Ansprüche 11 bis 16, die eines oder mehrere von Folgendem umfasst:
(i) 2,5 bis 30 Gewichtsprozent native oder modifizierte Stärke, wobei die Stärke vorzugsweise aus Folgendem ausgewählt wird: native Weizenstärke, modifizierte Weizenstärke, native Maisstärke, modifizierte Maisstärke, native Reisstärke, modifizierte Reisstärke, native Erbsenstärke, modifizierte Erbsenstärke, native Tapiokastärke und modifizierte Tapiokastärke,
(ii) bis zu 15 Gewichtsprozent bezogen auf die Vorläuferzusammensetzung eines oder mehrerer Farbmittel, die aus Folgendem ausgewählt sind: Milchpulver, Magermilchpulver, Molkepulver, Dextrose, Laktose, Kurkumaextrakt und Paprikaextrakt.

18. Vorläuferzusammensetzung nach einem der Ansprüche 11 bis 17, wobei das Speiseöl mindestens eines von Folgendem umfasst: Sonnenblumenöl, Rapsöl, Maisöl, Erdnussöl, Sesamöl, Sojaöl oder Palmöl.

19. Verfahren zur Herstellung einer
Vorläuferzusammensetzung nach Anspruch 11 bis 18 durch:
(i) Mischen aller Komponenten der
Vorläuferzusammensetzung mit Ausnahme des Protein- und/oder Peptidgemischs in einer Mischvorrichtung, um eine gemischte Zusammensetzung zu bilden, die mit dem essbaren Fett und/oder Öl beschichtet ist;
(ii) Mischen des trockenen Protein- und/oder Peptidgemischs mit der gemischten Zusammensetzung aus Schritt (i), so dass das trockene Protein- und/oder Peptidgemisch von dem Speisefett und/oder Öl im Wesentlichen unbeschichtet bleibt.

20. Verfahren nach Anspruch 19, das eine essbare Teigzusammensetzung mit einem pH-Wert im Bereich von 5,0 bis 9,0 bereitstellt, wenn 60 bis 30 Gewichtsteile der Vorläuferzusammensetzung mit 40 bis 70 Gewichtsteilen Wasser vermischt werden, um insgesamt 100 Gewichtsteile zu erhalten.

21. Verfahren zur Herstellung einer essbaren Teigzusammensetzung nach einem der Ansprüche 1 bis 10, das den Schritt des Hinzufügens von 40 bis 70 Gewichtsteilen Wasser zu 60 bis 30 Gewichtsteilen einer Vorläuferzusammensetzung umfasst, wie in einem der Ansprüche 11 bis 18 definiert, um insgesamt 100 Gewichtsteile zu erhalten.

22. Verfahren zur Herstellung einer essbaren Teigzusammensetzung nach einem der Ansprüche 1 bis 10, wobei das Verfahren folgende Schritte umfasst:
(i) Lösen des Protein- und/oder Peptidgemischs in Wasser, um eine Protein- und/oder Peptidlösung zu bilden; und
(ii) Kombinieren der Protein- und/oder Peptidlösung aus Schritt (i) mit den restlichen Komponenten der essbaren Teigzusammensetzung, um eine Aufschlämmung zu bilden.

23. Verfahren zur Herstellung eines
Nahrungsmittelprodukts, das Folgendes umfasst:
Bereitstellen eines Nahrungsmittelsubstrats mit einer Überzugsschicht aus einer essbaren Teigzusammensetzung nach einem der Ansprüche 1 bis 10 und Frittieren des teigbeschichteten Nahrungsmittelsubstrats in Öl und/oder Fett, um ein gekochtes oder teilweise gekochtes teigbeschichtetes Nahrungsmittelsubstrat bereitzustellen.

24. Verfahren nach Anspruch 23, wobei das Nahrungsmittelsubstrat aus Folgendem ausgewählt wird:
Fisch, Geflügel, Fleisch, Gemüse oder Obst und vorzugsweise Knochenfisch, Huhn, Pute, Ente, Schwein, Rind oder Wild.

25. Verfahren nach Anspruch 24, wobei das Nahrungsmittelsubstrat aus Geflügel ausgewählt wird und wobei das Protein- und/oder Peptidgemisch aus Geflügel abgeleitet wird oder wobei das Nahrungsmittelsubstrat aus Fisch ausgewählt wird und wobei das Protein- und/oder Peptidgemisch aus Fisch abgeleitet wird oder wobei das Nahrungsmittelsubstrat aus Fleisch ausgewählt wird und wobei das Protein- und/oder Peptidgemisch aus Fleisch abgeleitet wird.

26. Verfahren nach einem der Ansprüche 23 bis 25, wobei das gekochte oder teilweise gekochte teigbeschichtete Nahrungsmittelsubstrat nachfolgend gekühlt oder eingefroren wird.

27. Verfahren nach Anspruch 26, wobei das eingefrorene teigbeschichtete Nahrungsmittelsubstrat mit einer geschmacksverstärkenden Menge an Salzwasser besprüht wird, wobei das Salzwasser bei Kontakt mit dem gefrorenen teigbeschichteten Nahrungsmittelsubstrat gefriert.

28. Verfahren nach einem der Ansprüche 23 bis 27, wobei das teilweise gekochte teigbeschichtete Nahrungsmittelsubstrat nachfolgend durch Frittieren in Öl und/oder Fett und/oder durch Backen im Ofen vollständig gekocht wird.

29. Verfahren nach einem der Ansprüche 23 bis 28, wobei das Nahrungsmittelsubstrat mit einer Vielzahl von Überzugsschichten bereitgestellt wird und wobei mindestens die äußere Überzugsschicht aus einer essbaren Teigzusammensetzung nach einem der Ansprüche 1 bis 10 besteht.

30. Verfahren nach einem der Ansprüche 23 bis 29, wobei das Nahrungsmittelsubstrat mit einer Vielzahl von Überzugsschichten bereitgestellt wird und wobei das Nahrungsmittelsubstrat zusätzlich mit mindestens einer Schicht einer Zwischenlage versehen ist, die aus Brotkrumen und/oder Zwieback und/oder Mehl ausgewählt wird.

31. Nahrungsmittelprodukt, das ein
Nahrungsmittelsubstrat umfasst, das eine Überzugsschicht aus einer essbaren Teigzusammensetzung nach einem der Ansprüche 1 bis 10 aufweist.

32. Nahrungsmittelprodukt nach Anspruch 31, wobei das Nahrungsmittelsubstrat, das eine Überzugsschicht aus einer essbaren Teigzusammensetzung nach einem der Ansprüche 1 bis 10 aufweist, durch Frittieren in Fett und/oder Öl gekocht oder teilweise gekocht wurde; und, wenn das Nahrungsmittelprodukt durch Frittieren in Fett und/oder Öl teilweise gekocht wurde, das Nahrungsmittelprodukt nachfolgend vorzugsweise durch Backen im Ofen vollständig gekocht wird.

33. Nahrungsmittelprodukt nach Anspruch 31 oder Anspruch 32, wobei das Nahrungsmittelsubstrat aus Folgendem ausgewählt wird: Fisch, Geflügel, Fleisch, Gemüse oder Obst und vorzugsweise Knochenfisch, Huhn, Pute, Ente, Schwein, Rind oder Wild.

34. Nahrungsmittelprodukt nach Anspruch 33, wobei das Nahrungsmittelsubstrat aus Geflügel ausgewählt wird und wobei das Protein- und/oder Peptidgemisch aus Geflügel abgeleitet wird oder wobei das Nahrungsmittelsubstrat aus Fisch ausgewählt wird und wobei das Protein- und/oder Peptidgemisch aus Fisch abgeleitet wird oder wobei das Nahrungsmittelsubstrat aus Fleisch ausgewählt wird und wobei das Protein- und/oder Peptidgemisch aus Fleisch abgeleitet wird.

35. Nahrungsmittelprodukt nach einem der Ansprüche 31 bis 34, das gekühlt oder eingefroren ist.

36. Nahrungsmittelprodukt nach Anspruch 35, das eingefroren ist und das vor oder nach dem Einfrieren mit einer geschmacksverbessernden Beschichtung aus Salzwasser versehen wird.

37. Nahrungsmittelprodukt nach einem der Ansprüche 31 bis 36, wobei das Nahrungsmittelsubstrat mit einer Vielzahl von Überzugsschichten bereitgestellt wird und wobei mindestens die äußere Überzugsschicht eine essbare Teigzusammensetzung nach einem der Ansprüche 1 bis 10 umfasst.

38. Nahrungsmittelprodukt nach einem der Ansprüche 31 bis 37, wobei das Nahrungsmittelsubstrat mit einer Vielzahl von Überzugsschichten bereitgestellt wird und wobei das Nahrungsmittelsubstrat zusätzlich mit mindestens einer Schicht einer Zwischenlage versehen ist, die aus Brotkrumen und/oder Zwieback und/oder Mehl und/oder Keksmehl ausgewählt wird.

## Revendications

1. Composition de pâte à frire comestible pour frire dans de la graisse et/ou de l'huile, ladite composition de pâte à frire comestible comprenant :
(a) de 27 à 57 pour cent en poids de farine ;
(b) de 40 à 70 pour cent en poids d'eau ; et
(c) de 0,15 à 3,0 pour cent en poids d'un mélange de protéines et/ou de peptides dérivé de tissu musculaire animal obtenu à partir de poisson, de volaille ou de viande ;
dans laquelle la composition de pâte à frire comestible comprend jusqu'à 6 pour cent en poids d'une graisse et/ou d'une huile comestible rapporté à la composition de pâte à frire comestible ; et
dans laquelle la composition de pâte à frire comestible comprend une quantité égale ou inférieure à 0,030 mol/kg d'ions de métaux alcalins.

2. Composition de pâte à frire comestible selon la revendication 1, dans laquelle le mélange de protéines et/ou de peptides est choisi parmi :
(i) un mélange de protéines contenant des protéines myofibrillaires et sarcoplasmiques dérivées de tissu animal ; et/ou
(ii) un mélange de peptides préparé par dégradation enzymatique d'un mélange de protéines contenant des protéines myofibrillaires et sarcoplasmiques dérivées de tissu animal.

3. Composition de pâte à frire comestible selon l'une quelconque des revendications précédentes, comprenant de 0,25 à 2,0 pour cent en poids du mélange de protéines et/ou de peptides, de préférence de 0,5 à 1,0 pour cent en poids du mélange de protéines et/ou de peptides.

4. Composition de pâte à frire comestible selon l'une quelconque des revendications précédentes, dans laquelle la composition de pâte à frire comestible comprend une quantité égale ou inférieure à 0,025 mol/kg d'ions de métaux alcalins, de préférence une quantité égale ou inférieure à 0,020 mol/kg d'ions de métaux alcalins.

5. Composition de pâte à frire comestible selon l'une quelconque des revendications précédentes, comprenant en outre un système levant chimique ou biologique, telle qu'une composition dans laquelle le système levant chimique comprend au moins un agent levant alcalin et au moins un agent levant acide qui réagissent ensemble pour former du dioxyde de carbone gazeux, de préférence dans laquelle le système levant chimique comprend un ou plusieurs agents levants alcalins choisis parmi : le bicarbonate de sodium, le carbonate de sodium, le bicarbonate d'ammonium, le carbonate d'ammonium, le bicarbonate de potassium, le carbonate de potassium et le bitartrate de potassium, et de préférence dans laquelle le système levant chimique comprend un ou plusieurs agents levants acides choisis parmi : le phosphate de monocalcium, le phosphate de dicalcium, le phosphate de monosodium, le phosphate de sodium-aluminium et le pyrophosphate acide de sodium comestible.

6. Composition de pâte à frire comestible selon la revendication 5, dans laquelle le système levant chimique fournit plus de 90 pour cent en moles des ions de métaux alcalins dans la composition de pâte à frire.

7. Composition de pâte à frire comestible selon l'une quelconque des revendications précédentes, dans laquelle la farine comprend de 0 à 100 pour cent en poids de farine de blé, de 0 à 100 pour cent en poids de farine de maïs et de 0 à 30 pour cent en poids de farine de riz.

8. Composition de pâte à frire comestible selon l'une quelconque des revendications précédentes, comprenant un ou plusieurs des éléments suivants :
(i) de 1,5 à 18 pour cent en poids d'amidon naturel ou modifié, de préférence dans laquelle l'amidon est choisi parmi l'amidon de blé naturel, l'amidon de blé modifié, l'amidon de maïs naturel, l'amidon de maïs modifié, l'amidon de riz naturel, l'amidon de riz modifié, l'amidon de pois naturel, l'amidon de pois modifié, l'amidon de tapioca naturel, l'amidon de tapioca modifié, l'amidon de pomme de terre naturel et l'amidon de pomme de terre modifié ;
(ii) jusqu'à 10 pour cent en poids rapporté à la composition de pâte à frire comestible d'un ou de plusieurs agents colorants choisis parmi : la poudre de lait, la poudre de lait écrémé, la poudre de petit-lait, le dextrose, le lactose, l'extrait de curcuma et l'extrait de paprika ; ou
(iii) de l'huile comestible comprenant au moins une huile parmi l'huile de tournesol, l'huile de colza, l'huile de maïs, l'huile d'arachide, l'huile de sésame, l'huile de soja ou l'huile de palme.

9. Composition de pâte à frire comestible selon l'une quelconque des revendications précédentes, ayant un pH compris dans l'intervalle de 5,0 à 9,0.

10. Composition de pâte à frire comestible selon l'une quelconque des revendications précédentes, la composition ne comprenant pas d'autres agents acidifiants ou alcalinisants que ceux faisant partie du système levant chimique.

11. Composition précurseur pour préparer une composition de pâte à frire comestible selon l'une quelconque des revendications 1 à 10, la composition précurseur comprenant :
(a) de 45 à 95 pour cent en poids de farine ; et
(b) de 0,25 à 5,0 pour cent en poids d'un mélange sec de protéines et/ou de peptides selon l'une quelconque des revendications 1 à 3,
dans laquelle la composition précurseur comprend jusqu'à 10 pour cent en poids d'une graisse et/ou d'une huile comestibles rapporté à la composition précurseur ; et
dans laquelle la composition précurseur comprend une quantité inférieure ou égale à 0,050 mol/kg d'ions de métaux alcalins.

12. Composition précurseur selon la revendication 11, comprenant de 0,40 à 3,4 pour cent en poids du mélange de protéines et/ou de peptides, de préférence comprenant de 0,8 à 1,7 pour cent en poids du mélange de protéines et/ou de peptides.

13. Composition précurseur selon la revendication 11 ou la revendication 12, dans laquelle la composition précurseur comprend une quantité inférieure ou égale à 0,042 mol/kg d'ions de métaux alcalins, de préférence une quantité inférieure ou égale à 0,033 mol/kg d'ions de métaux alcalins.

14. Composition précurseur selon l'une quelconque des revendications 11 à 13, comprenant en outre un système levant chimique ou biologique, comme est défini dans la revendication 5.

15. Composition précurseur selon la revendication 14, dans laquelle le système levant chimique fournit plus de 90 pour cent en moles des ions de métaux alcalins dans la composition précurseur.

16. Composition précurseur selon l'une quelconque des revendications 11 à 15, dans laquelle la farine comprend de 0 à 100 pour cent en poids de farine de blé, de 0 à 100 pour cent en poids de farine de maïs et de 0 à 30 pour cent en poids de farine de riz.

17. Composition précurseur selon l'une quelconque des revendications 11 à 16, comprenant un ou plusieurs des éléments suivants :
(i) de 2,5 à 30 pour cent en poids d'amidon naturel ou modifié, de préférence dans laquelle l'amidon est choisi parmi l'amidon de blé naturel, l'amidon de blé modifié, l'amidon de maïs naturel, l'amidon de maïs modifié, l'amidon de riz naturel, l'amidon de riz modifié, l'amidon de pois naturel, l'amidon de pois modifié, l'amidon de tapioca naturel, l'amidon de tapioca modifié.
(ii) jusqu'à 15 pour cent en poids rapporté à la composition précurseur d'un ou de plusieurs agents colorants choisis parmi : la poudre de lait, la poudre de lait écrémé, la poudre de petit-lait, le dextrose, le lactose, l'extrait de curcuma et l'extrait de paprika.

18. Composition précurseur selon l'une quelconque des revendications 11 à 17, dans laquelle l'huile comestible comprend au moins une huile parmi l'huile de tournesol, l'huile de colza, l'huile de maïs, l'huile d'arachide, l'huile de sésame, l'huile de soja ou l'huile de palme.

19. Procédé de préparation d'une composition précurseur selon les revendications 11 à 18, en :
(i) mélangeant tous les composants de la composition précurseur à l'exception du mélange de protéines et/ou de peptides dans un appareil mélangeur de manière à former une composition mélangée enrobée dans la graisse et/ou l'huile comestibles ;
(ii) mélangeant le mélange sec de protéines et/ou de peptides avec la composition mélangée de l'étape (i) de sorte que le mélange sec de protéines et/ou de peptides reste sensiblement non enrobé par la grasse et/ou l'huile comestibles.

20. Procédé selon la revendication 19, qui fournit une composition de pâte comestible ayant un pH compris dans l'intervalle de 5,0 à 9,0 quand 60 à 30 parts en poids de la composition précurseur sont mélangées avec 40 à 70 parts en poids d'eau, pour obtenir un total de 100 parts en poids.

21. Procédé de préparation d'une composition de pâte à frire comestible comme est défini dans l'une quelconque des revendications 1 à 10, comprenant l'étape consistant à ajouter de 40 à 70 parts en poids d'eau à 60 à 30 parts en poids d'une composition précurseur comme est défini dans l'une quelconque des revendications 11 à 18, pour obtenir un total de 100 parts en poids.

22. Procédé de préparation d'une composition de pâte à frire comestible comme est défini dans l'une quelconque des revendications 1 à 10, le procédé comprenant les étapes de :
(i) dissolution du mélange de protéines et/ou de peptides dans de l'eau pour former une solution de protéines et/ou de peptides ; et
(ii) combinaison de la solution de protéines et/ou de peptides de l'étape (i) avec les composants restants de la composition de pâte à frire comestible pour former une bouillie.

23. Procédé de préparation d'un produit alimentaire comprenant la fourniture à un substrat alimentaire d'une couche d'enrobage d'une composition de pâte à frire comestible comme est défini dans l'une quelconque des revendications 1 à 10, et la friture du substrat alimentaire enrobé de pâte à frire dans de l'huile et/ou de la graisse pour fournir un substrat alimentaire enrobé de pâte à frire cuit ou partiellement cuit.

24. Procédé selon la revendication 23, dans lequel le substrat alimentaire est sélectionné parmi le poisson, la volaille, la viande, les légumes ou les fruits, et de préférence est sélectionné parmi le poisson à nageoires, le poulet, la dinde, le canard, le porc, le boeuf ou le chevreuil.

25. Procédé selon la revendication 24, dans lequel le substrat alimentaire est choisi parmi la volaille, et dans lequel le mélange de protéines et/ou de peptides est dérivé de la volaille ; ou dans lequel le substrat alimentaire est choisi parmi le poisson, et dans lequel le mélange de protéines et/ou de peptides est dérivé du poisson ; ou dans lequel le substrat alimentaire est choisi parmi la viande, et dans lequel le mélange de protéines et/ou de peptides est dérivé de la viande.

26. Procédé selon l'une quelconque des revendications 23 à 25, dans lequel le substrat alimentaire enrobé de pâte à frire cuit ou partiellement cuit est réfrigéré ou congelé ultérieurement.

27. Procédé selon la revendication 26, dans lequel le substrat alimentaire enrobé de pâte à frire congelé est pulvérisé avec une quantité d'eau salée rehaussant le goût, dans lequel l'eau salée gèle au contact du substrat alimentaire enrobé de pâte à frire congelé.

28. Procédé selon l'une quelconque des revendications 23 à 27, dans lequel le substrat alimentaire enrobé de pâte à frire partiellement cuit est cuit complètement ultérieurement par friture dans de l'huile et/ou de la graisse et/ou cuisson au four.

29. Procédé selon l'une quelconque des revendications 23 à 28, dans lequel le substrat alimentaire présente une pluralité de couches d'enrobage et dans lequel au moins la couche d'enrobage externe est une couche d'une composition de pâte à frire comestible comme est défini dans l'une quelconque des revendications 1 à 10.

30. Procédé selon l'une quelconque des revendications 23 à 29, dans lequel le substrat alimentaire présente une pluralité de couches d'enrobage et dans lequel le substrat alimentaire présente en plus au moins une couche d'un intermédiaire choisi parmi la chapelure et/ou la biscotte et/ou la farine.

31. Produit alimentaire comprenant un substrat alimentaire ayant une couche d'enrobage d'une composition de pâte à frire comestible comme est défini dans l'une quelconque des revendications 1 à 10.

32. Produit alimentaire selon la revendication 31, dans lequel le substrat alimentaire ayant une couche d'enrobage d'une composition de pâte à frire comestible comme est défini dans l'une quelconque des revendications 1 à 10 a été cuit ou partiellement cuit par friture dans de la graisse et/ou de l'huile ; et, quand le produit alimentaire a été partiellement cuit par friture dans de la graisse et/ou de l'huile, le produit alimentaire est de préférence cuit complétement ultérieurement par cuisson au four.

33. Produit alimentaire selon la revendication 31 ou la revendication 32, dans lequel le substrat alimentaire est choisi parmi le poisson, la volaille, la viande, les légumes ou les fruits, choisi de préférence parmi le poisson à nageoires, le poulet, la dinde, le canard, le porc, le boeuf ou le chevreuil.

34. Produit alimentaire selon la revendication 33, dans lequel le substrat alimentaire est choisi parmi la volaille, et dans lequel le mélange de protéines et/ou de peptides est dérivé de la volaille ; ou dans lequel le substrat alimentaire est choisi parmi le poisson, et dans lequel le mélange de protéines et/ou de peptides est dérivé du poisson ; ou dans lequel le substrat alimentaire est choisi parmi la viande, et dans lequel le mélange de protéines et/ou de peptides est dérivé de la viande.

35. Produit alimentaire selon l'une quelconque des revendications 31 à 34, qui est réfrigéré ou congelé.

36. Produit alimentaire selon la revendication 35, qui est congelé et qui présente un enrobage d'eau salée rehaussant le goût avant d'être congelé ou après.

37. Produit alimentaire selon l'une quelconque des revendications 31 à 36, dans lequel le substrat alimentaire présente une pluralité de couches d'enrobage, et dans lequel au moins la couche d'enrobage externe comprend une composition de pâte à frire comestible comme est défini dans l'une quelconque des revendications 1 à 10.

38. Produit alimentaire selon l'une quelconque des revendications 31 à 37, dans lequel le substrat alimentaire présente une pluralité de couches d'enrobage, et dans lequel le substrat alimentaire présente en plus au moins une couche d'un intermédiaire choisi parmi la chapelure et/ou la biscotte et/ou la farine et/ou la farine de biscuit.
